(19) **Europäisches Patentamt**

**European Patent Office**

**Office européen des brevets**

(11) **EP 1 249 717 A2**

(12) **EUROPEAN PATENT APPLICATION**

(43) Date of publication:
**16.10.2002 Bulletin 2002/42**

(51) Int Cl.$^7$: **G02B 1/11**

(21) Application number: **02007938.0**

(22) Date of filing: **09.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.04.2001 JP 2001110887**

(71) Applicant: **MATSUSHITA ELECTRIC INDUSTRIAL CO., LTD.**
**Kadoma-shi, Osaka 571-8501 (JP)**

(72) Inventors:
• **Korenaga, Tsuguhiro**
  **Katano-shi, Osaka 576-0021 (JP)**
• **Iida, Masanori**
  **Katano-shi, Osaka 576-0033 (JP)**
• **Asakura, Hiroyuki**
  **Tennoji-ku, Osaka-shi, Osaka 543-0015 (JP)**

(74) Representative: **Grünecker, Kinkeldey, Stockmair & Schwanhäusser Anwaltssozietät**
**Maximilianstrasse 58**
**80538 München (DE)**

(54) **Antireflection coating and optical element using the same**

(57)     An antireflection coating has at least a first layer constituted by a coating with refractivity of $n_1$ and optical thickness of $d_1$ which is provided on a substantially transparent substrate with refractivity of $n_0$, and a second layer constituted by a $SiO_2$ coating with optical thickness of $d_2$ which is provided on the first layer,

wherein the $n_0$, $n_1$, $d_1$ and $d_2$ satisfy the following conditions:

$$1.42 \leq n_0 \leq 1.53,$$

$$1.95 \leq n_1 \leq 2.35, \quad 0.40\lambda \leq d_1 \leq 0.44\lambda,$$

and

$$0.40\lambda \leq d_2 \leq 0.44\lambda,$$

wherein the central wavelength of light to be prevented from being reflected is $\lambda$.

Fig. 1

**EP 1 249 717 A2**

**Description**

**BACKGROUND OF THE INVENTION**

**Field of the Invention**

The present invention relates to an antireflection coating to be coated on an optical component, and an optical element such as a lens, prism, optical fiber and optical waveguide comprising the antireflection coating.

**Related Art of the Invention**

A technique in which the surface of an optical component such as a lens is treated to provide antireflection properties has been known since long ago. By conducting the treatment for providing antireflection properties, optical losses can be alleviated and noises caused by reflected light can be reduced.

If the refractivity of a substrate, and the optical wavelength and incident angle of light to be prevented from being reflected are known, the structure of an antireflection coating (having some one to four layers) for reducing reflectance level to 0 can be theoretically determined (See, for example, Optic/Thin Film Coating Technical Manual, p. 242, Optronics Co., Ltd.). Furthermore, the entire disclosure of the above document is incorporated herein by reference in its entirety.

Thereby, the reflectivity and thickness of each layer for reducing reflectance level to almost 0 can be designingly specified. If such a coating structure is faithfully achieved by a process for forming a thin film coating, an ideal antireflection coating can be obtained from a viewpoint of performance.

For achieving an antireflection coating with reflectance of 0.5% or lower or so, a vacuum coating or sputtering process enabling thickness to be adjusted accurately and ensuring reproducibility of refractivity, or a coating process for forming a thin film coating based on the above process is the most suitable as a production process.

Such a theoretically determined coating structure has been previously well known.

However, the number of thin film coating materials capable of being used on a practical basis is in fact limited, and consequently refractivity applicable in the coating structure is confined within narrow limits.

For an antireflection coating constituted by a single layer, for example, theoretical reflectance for vertically incident light will be equal to 0 if the refractivity is the square root of that of the substrate, and the optical thickness equals one quarter of a desired wavelength . In the case where a general-purpose glass (refractivity: 1.5) is used as an optical material, a thin film coating with refractivity of about 1.2 is needed.

However, even $MgF_2$ having minimum possible refractivity for practical use as a thin film coating of single layer provides refractivity of about 1.38 as actual refractivity, and if it is used for an antireflection coating, reflection with a reflectance level of about 1.3% will occur. Such a single layer coating cannot be practically used because a reflectance level of at least 1% or lower, preferably 0.5% or lower is required for applications of optical products such as optical communication devices or optical discs.

On the other hand, in the case where the antireflection coating is formed with two or more coatings, a desired reflectance level can be obtained, but the following problems will be encountered because two or more types of coating materials are required, and the number of coating layers is increased.

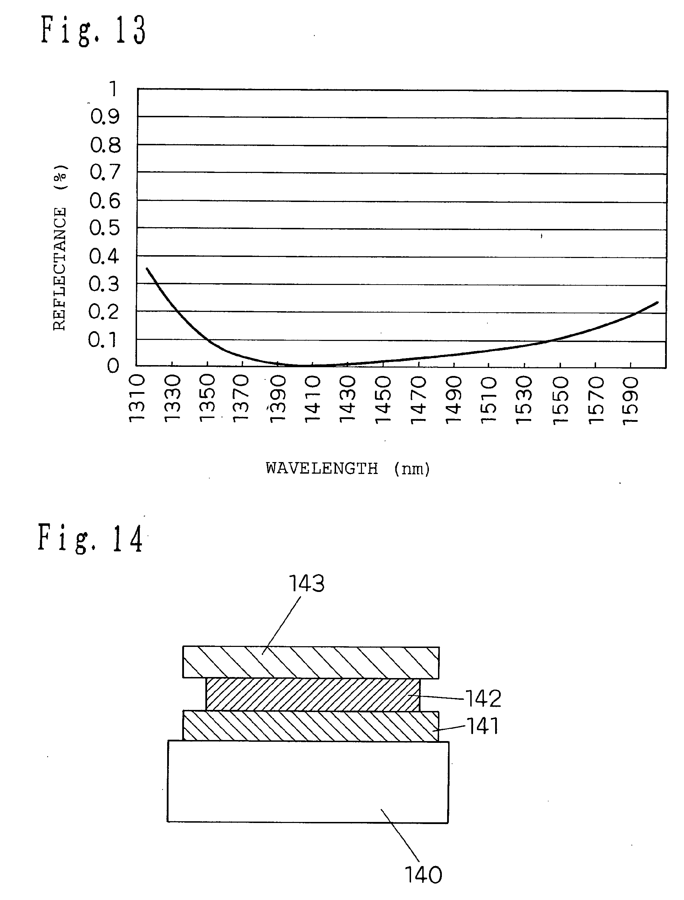

Figure 14 shows a typical structure of an antireflection coating constituted by three layers. A first layer 141 with refractivity of 1.7 and optical thickness of $0.25\lambda$ ($\lambda$ denotes a central wavelength), a second layer 142 with refractivity of 2.0 to 2.2 and optical thickness of $0.5\lambda$, and a third layer 143 with refractivity of 1.38 and optical thickness of $0.25\lambda$ are provided on a glass 140 one after another.

If about three layers are formed as coating layers, three or more types of materials should be used, and coating conditions during production are different for each material, and therefore production based variations in properties, namely variations in thickness and refractivity for each layer will be increased unless conditions are sufficiently stabilized for each material.

In the case where the antireflection coating is formed with a plurality of coatings, optimum values are calculated in advance for the thickness and refractivity for each layer, and then an adjustment is made so that the conditions for each coating are close to these optimum values, but a desired reflectance level cannot be obtained due to property variations, thus making it difficult to obtain a desired antireflection coating, leading to a drop in yield.

**SUMMARY OF THE INVENTION**

Thus, the present invention has its object provision of an antireflection coating having a reflectance level of 1% or lower or 0.5% or lower, and allowing the yield during production to be enhanced in anticipation of variations in property, and an optical element comprising such an antireflection coating.

The 1st invention of the present invention (corresponding to claim 1) is an antireflection coating comprising at least a first layer constituted by a coating with refractivity of $n_1$ and optical thickness of $d_1$ which is provided on a substantially transparent substrate with refractivity of $n_0$, and a second layer constituted by a $SiO_2$ coating with optical thickness of $d_2$ which is provided on the first layer,

wherein said $n_0$, $n_1$, $d_1$ and $d_2$ satisfy the following conditions:

$1.42 \leq n_0 \leq 1.53$,

$1.95 \leq n_1 \leq 2.35$, $0.40\lambda \leq d_1 \leq 0.44\lambda$, and

$0.40\lambda \leq d_2 \leq 0.44\lambda$,

wherein the central wavelength of light to be prevented from being reflected is $\lambda$.

The 2nd invention of the present invention (corresponding to claim 2) is an antireflection coating comprising at least a first layer constituted by a coating with refractivity of $n_1$ and optical thickness of $d_1$ which is provided on a substantially transparent substrate with refractivity of $n_0$, and a second layer constituted by a $MgF_2$ coating with optical thickness of $d_2$ which is provided on the first layer,

wherein said $n_0$, $n_1$, $d_1$ and $d_2$ satisfy the following conditions:

$1.42 \leq n_0 \leq 1.53$,

$1.95 \leq n_1 \leq 2.35$, $0.42\lambda \leq d_1 \leq 0.46\lambda$, and

$0.17\lambda \leq d_2 \leq 0.19\lambda$,

wherein the central wavelength of light to be prevented from being reflected is $\lambda$.

The 3rd invention of the present invention (corresponding to claim 3) is an antireflection coating comprising at least a first layer constituted by a $SiO_2$ coating with optical thickness of $d_1$ which is provided on a substantially transparent substrate with refractivity of $n_0$, a second layer constituted by a coating with refractivity of $n_2$ and optical thickness of $d_2$ which is provided on the first layer, and a third layer constituted by a $SiO_2$ coating with optical thickness of $d_3$ which is provided on the second layer,

wherein said $n_0$, $d_1$, $n_2$, $d_2$ and $d_3$ satisfy the following conditions:

$1.42 \leq n_0 \leq 1.53$,

$0.06\lambda \leq d_1 \leq 0.07\lambda$,

$1.95 \leq n_2 \leq 2.35$, $0.41\lambda \leq d_2 \leq 0.45\lambda$, and

$0.16\lambda \leq d_3 \leq 0.18\lambda$,

wherein the central wavelength of light to be prevented from being reflected is $\lambda$.

The 4th invention of the present invention (corresponding to claim 4) is an antireflection coating comprising at least a first layer constituted by a $MgF_2$ coating with optical thickness of $d_1$ which is provided on a substantially transparent substrate with refractivity of $n_0$, a second layer constituted by a coating with refractivity of $n_2$ and optical thickness of $d_2$ which is provided on the first layer, and a third layer constituted by a $MgF_2$ coating with optical thickness of $d_3$ which is provided on the second layer,

wherein said $n_0$, $d_1$, $n_2$, $d_2$ and $d_3$ satisfy the following conditions:

$1.42 \leq n_0 \leq 1.53$,

$0.05\lambda \leq d_1 \leq 0.07\lambda$,

$1.95 \leq n_2 \leq 2.35$, $0.43\lambda \leq d_2 \leq 0.46\lambda$, and

$0.16\lambda \leq d_3 \leq 0.19\lambda$,

wherein the central wavelength of light to be prevented from being reflected is $\lambda$.

The 5th invention of the present invention (corresponding to claim 5) is an antireflection coating comprising at least a first layer constituted by a coating with refractivity of $n_1$ and optical thickness of $d_1$ which is provided on a substantially transparent substrate with refractivity of $n_0$, a second layer constituted by a $SiO_2$ coating with optical thickness of $d_2$ which is provided on the first layer, third layer constituted by a coating with refractivity of $n_3$ and optical thickness of $d_3$ which is provided on the second layer, and a fourth layer constituted by a $SiO_2$ coating with optical thickness of $d_4$ which is provided on the third layer,

wherein said $n_0$, $n_1$, $d_1$, $d_2$, $n_3$, $d_3$ and $d_4$ satisfy the following conditions:

$1.42 \leq n_0 \leq 1.53$,

$1.95 \leq n_1 \leq 2.35$, $0.08\lambda \leq d_1 \leq 0.11\lambda$,

$0.06\lambda \leq d_2 \leq 0.07\lambda$,

$1.95 \leq n_3 \leq 2.35$, $0.24\lambda \leq d_3 \leq 0.26\lambda$, and

$0.24\lambda \leq d_4 \leq 0.26\lambda$,

wherein the central wavelength of light to be prevented from being reflected is $\lambda$.

The 6th invention of the present invention (corresponding to claim 6) is an antireflection coating comprising at least a first layer constituted by a coating with refractivity of $n_1$ and optical thickness of $d_1$ which is provided on a substantially transparent substrate with refractivity of $n_0$, a second layer constituted by a $MgF_2$ coating with optical thickness of $d_2$ which is provided on the first layer, third layer constituted by a coating with refractivity of $n_3$ and optical thickness of $d_3$ which is provided on the second layer, and a fourth layer constituted by a $MgF_2$ coating with optical

thickness of $d_4$ which is provided on the third layer,

wherein said $n_0$, $n_1$, $d_1$, $d_2$, $n_3$, $d_3$ and $d_4$ satisfy the following conditions:

$1.42 \leq n_0 \leq 1.53$,

$1.95 \leq n_1 \leq 2.35$, $0.11\lambda \leq d_1 \leq 0.13\lambda$,

$0.05\lambda \leq d_2 \leq 0.06\lambda$,

$1.95 \leq n_3 \leq 2.35$, $0.23\lambda \leq d_3 \leq 0.25\lambda$, and

$0.25\lambda \leq d_4 \leq 0.27\lambda$,

wherein the central wavelength of light to be prevented from being reflected is $\lambda$.

The 7th invention of the present invention (corresponding to claim 7) is the antireflection coating according to any of 1st, 3rd and 5th inventions, wherein the layers other than those constituted by $SiO_2$ coatings are constituted by any of $TiO_2$, $Ta_2O_5$, $ZrO_2$ and $ZnS$ or combinations thereof.

The 8th invention of the present invention (corresponding to claim 8) is the antireflection coating according to any of 2nd, 4th and 6th inventions, wherein the layers other than those constituted by $MgF_2$ coatings are constituted by any of $TiO_2$, $Ta_2O_5$, $ZrO_2$ and $ZnS$ or combinations thereof.

As described above, for solving the problems, the present invention provides an antireflection with two to four layers formed therein using only two types of coating materials capable of being used on a practical basis. It achieves a reflectance level of 0.5% or lower, allows the yield to be enhanced, and facilitates production.

The 9th invention of the present invention (corresponding to claim 9) is an optical element comprising the antireflection coating according to any of 1st to 8th inventions and said substantially transparent substrate with refractivity of $n_0$ corresponding to the antireflection coating.

**BRIEF DESCRIPTION OF THE DRAWINGS**

Figure 1 is a schematic sectional view of an antireflection coating in Embodiment 1 of the present invention.

Figure 2 is a schematic view of a typical vacuum coater for use in formation of coatings.

Figure 3 shows the reflectance spectral property of the antireflection coating in Embodiment 1 of the present invention.

Figure 4 is a schematic sectional view of the antireflection coating in Embodiment 2 of the present invention.

Figure 5 shows the reflectance spectral property of the antireflection coating in Embodiment 2 of the present invention.

Figure 6 is a schematic sectional view of the antireflection coating in Embodiment 3 of the present invention.

Figure 7 shows the reflectance spectral property of the antireflection coating in Embodiment 3 of the present invention.

Figure 8 is a schematic sectional view of the antireflection coating in Embodiment 4 of the present invention.

Figure 9 shows the reflectance spectral property of the antireflection coating in Embodiment 4 of the present invention.

Figure 10 is a schematic sectional view of the antireflection coating in Embodiment 5 of the present invention.

Figure 11 shows the reflectance spectral property of the antireflection coating in Embodiment 5 of the present invention.

Figure 12 is a schematic sectional view of the antireflection coating in Embodiment 6 of the present invention.

Figure 13 shows the reflectance spectral property of the antireflection coating in Embodiment 6 of the present invention.

Figure 14 is a schematic sectional view of a conventional typical antireflection coating.

**Description of Symbols**

10, 40, 60, 80, 100, 120 ... Lens

11, 41, 61, 81, 101, 121 ... First layer

12, 42, 62, 82, 102, 122 ... Second layer

63, 83, 103, 123 ... Third layer

104, 124 ... Fourth layer

## PREFERRED EMBODIMENTS OF THE INVENTION

The present invention will be described below referring to the drawings.

(Embodiment 1)

Embodiment 1 in the present invention will be described with reference to the drawings.

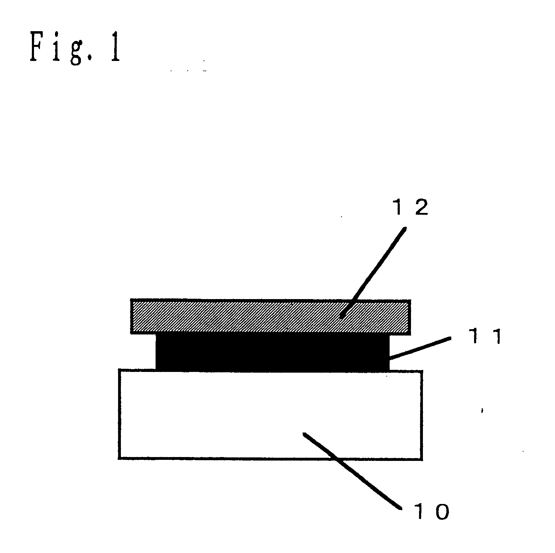

Figure 1 is a sectional view of an antireflection coating provided on the surface of a lens 10 corresponding to a substantially transparent substrate with refractivity of $h_0$ of the present invention. The coating structure is very simple, and the productivity is enhanced.

BK7 (with wavelength of 1510 nm and refractivity of 1.50) is used as a base material for the lens 10, and is provided thereon with a multi-layer coating constituted by a first layer 11 and second layer 12 shown in Table 1.

[Table 1]

| Constitution | Materials | Refractivity | Thickness(nm) | Optical thickness(nm) |
|---|---|---|---|---|
| Second layer 12 | $SiO_2$ | 1.44 | 183 | 264 |
| First layer 11 | $TiO_2$ | 2.20 | 292 | 642 |
| Lens 10 | BK7 | 1.50 | - | - |

One example of methods for forming the multi-layer coating shown in Table 1 will be described below.

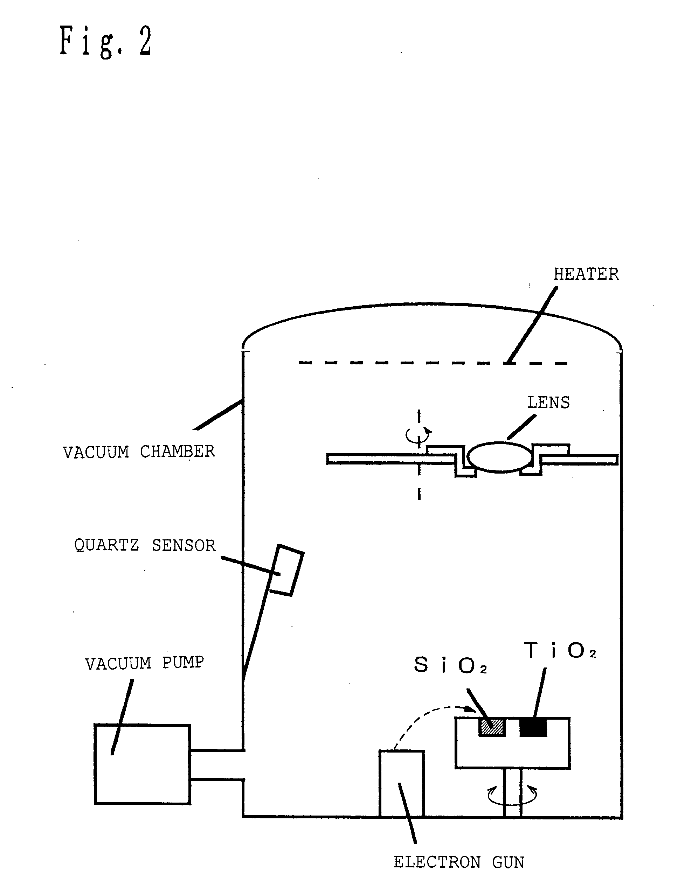

The coating is formed using a vacuum coater as shown in Figure 2.

After the lens is cleaned, the lens is set in a predetermined position in the vacuum coater, and air is evacuated. The temperature of the lens is controlled by a heater so that it is kept at 300°C while air is evacuated. After a vacuum is produced, $TiO_2$ and $SiO_2$ as coating materials are alternately heated and molten to conduct vacuum coating. At this time, thickness control and control of coating rates for each layer may be carried out using a quartz sensor, optical interface type thickness sensor (not shown) or the like.

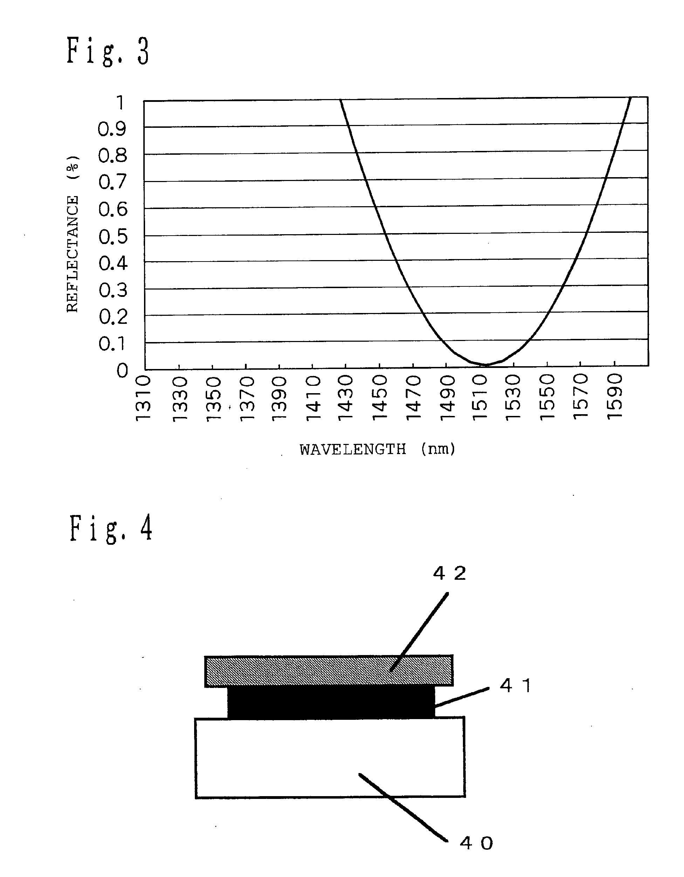

Figure 3 shows dependency of reflectance on wavelengths when light is vertically let in, with respect to the antireflection coating constituted by the first layer 11 and second layer 12 of Table 1.

As shown in Figure 3, the reflectance level is 0.5% or lower when the wavelength is in the range of 1460 to 1570 nm. This reflectance level is low enough to ensure the practical use of the antireflection coating. In particular, the reflectance level is 0.05% or lower at a wavelength of 1510 nm.

The antireflection coating of Embodiment 1 is highly reliable because $TiO_2$ and $SiO_2$ having excellent chemical durability and mechanical strength are used as coating materials. Properties of samples made on an experimental basis were evaluated before and after they were subjected to heat shock tests at 80°C and -20°C and high temperature/ humidity tests at 85°C and 95% RH, and as a result, it has been found that neither appearances nor optical properties of coatings were changed.

This is due to the fact that for the antireflection coating of the present invention, internal stresses generating in the coating can be neutralized using predetermined tried-and-true materials and predetermined thickness. Furthermore, it is more desirable that the substrate is heated during formation of the coating as in this embodiment from a viewpoint of reliability, but it is also possible to coat the substrate at a normal temperature, and coatings can be applied to lenses made of plastic as well as various kinds of glass based lenses.

As described above, the antireflection coating of Embodiment 1 is excellent in optical property and reliability, and has only a small number of layers with two types of materials to reduce costs, and therefore if this coating is applied to optical components such as lenses, prisms, fibers and optical waveguides, very useful optical elements can be obtained.

In addition, the process for forming a coating is not limited to a vacuum coating process, and for example, a spattering process may be used.

As a result of more elaborate examinations, in the present invention, it has been found that even for a structure other than the structure described in this embodiment, a similar antireflection effect can be expected if the refractivity $n_0$ of the lens 10 is in the range of 1.42 to 1.53, the refractivity $n_1$ of the first layer 11 is in the range of 1.95 to 2.35, the optical thickness $d_1$ of the first layer 11 is in the range of $0.40\lambda$ to $0.44\lambda$ and the optical thickness $d_2$ of $SiO_2$ of the second layer 12 is in the range of 0.17 to $0.18\lambda$, wherein the central wavelength is $\lambda$ (nm) ($\lambda$=1510 nm for this embodiment) . For one specific example of the lens, Model No. S-FPL53 (refractivity of 1.43 at a wavelength of 1530 nm) manufactured by Ohara Co., Ltd. or Model No. S-BAL53 (refractivity of 1.52 at a wavelength of 1530 nm) manufactured by the same company may be used.

In Table 2 is shown as one example the reflectance level of the antireflection coating when the thickness of the first layer 11 and second layer 12 is changed in the case where the refractivity of the lens 10 is 1.50 (BK7), the first layer 11 provided on the lens 10 is a layer of $TiO_2$ with refractivity of 2.20, and the second layer 12 is a layer of $SiO_2$ with refractivity of 1.44.

[Table 2]

| $n_0$=1. 50(BK7) $n_1$=2. 20($TiO_2$) $n_2$=1. 44($SiO_2$) $\lambda$=1510nm | | | | | | |
|---|---|---|---|---|---|---|
| $d_1$ | 0. 40 $\lambda$ | 0. 40 $\lambda$ | 0. 44 $\lambda$ | 0. 44 $\lambda$ | 0. 38 $\lambda$ | 0. 38 $\lambda$ |
| $d_2$ | 0. 17 $\lambda$ | 0. 18 $\lambda$ | 0. 17 $\lambda$ | 0. 18 $\lambda$ | 0. 17 $\lambda$ | 0. 18 $\lambda$ |
| Refrectance(%) | 0.48 | 0.36 | 0.09 | 0.16 | 1.38 | 1.08 |
| $d_1$ | 0. 46 $\lambda$ | 0. 46 $\lambda$ | 0. 40 $\lambda$ | 0. 44 $\lambda$ | 0. 40 $\lambda$ | 0. 44 $\lambda$ |
| $d_2$ | 0. 17 $\lambda$ | 0. 18 $\lambda$ | 0. 16 $\lambda$ | 0. 16 $\lambda$ | 0. 19 $\lambda$ | 0. 19 $\lambda$ |
| Refrectance(%) | 0.62 | 0.7 | 0.75 | 0.11 | 0.38 | 0.32 |

As shown in Table 2, it can be understood that when the thickness $d_1$ of the first layer 11 is in the range of 0.40$\lambda$ to 0.44$\lambda$, and the thickness $d_2$ of the second layer 12 is in the range of 0.17$\lambda$ to 0.18$\lambda$, the reflectance level is equal to or lower than 0.5%, thus making it possible to obtain an excellent antireflection effect. Furthermore, a similar effect can be obtained as long as the refractivity of the first layer 11 is in the range of 1.95 to 2.35 even if it takes on a value other than 2.20.

This also reflects the following concept. That is, the values of thicknesses $d_1$ and $d_2$ giving a reflectance level of 0.5% or lower have certain ranges, and therefore if $d_1$ is set to 0.42$\lambda$ and $d_2$ is set to 0.175$\lambda$ as optimum values for production, for example, the resulting coating can provide a sufficient antireflection effect even if the thickness $d_1$ suffers production based variations of $\pm 0.01\lambda$ and the thickness $d_2$ suffers production based variations of $\pm 0.005\lambda$.

When the coating is produced based on a conventional technique, the thicknesses $d_1$ and $d_2$ satisfying appropriate conditions as to the reflectance level must be defined as a unique pair of optimum values giving the best reflectance level, and thus an antireflection coating with layer thickness deviating from the defined values may be considered as a defective item even if the deviation from the optimum value is very small, resulting in a drop in yield during production.

In this embodiment, however, conditions for thickness with respect to an optimum value of reflectance are defined as certain ranges of values, whereby the coating can be produced in anticipation of variations in thickness during production, resulting in enhanced yields during production.

Furthermore, in this embodiment, the case where a wavelength of 1510 nm is applied has been described, but an antireflection coating having same optical properties can be obtained with any wavelength if optical thickness is increased or decreased in proportion to the wavelength with absorptivity and refractivity kept unchanged. For $TiO_2$ and $SiO_2$, absorptivity is kept at almost 0 through the visible region to the near infrared region, and the magnitude of dispersion of refractivity by wavelengths is small, thus making it possible to obtain an antireflection coating reflecting light through the visible region to the near infrared region only by changing thickness depending on wavelengths.

In addition, $TiO_2$ is used as a coating material for the first layer 11 in this embodiment, but the first layer 11 may be formed using any of $TiO_2$, $Ta_2O_5$, $ZrO_2$ and ZnS or a material constituted by a combination thereof, and in this case, an antireflection coating having a similar function can be obtained.

(Embodiment 2)

Embodiment 2 in the present invention will be described with reference to the drawings.

Figure 4 is a sectional view of an antireflection coating provided on the surface of a lens corresponding to a substantially transparent substrate with refractivity of $h_0$ of the present invention 40. The coating has a very simple structure, and the productivity enhanced.

BK7 (with refractivity of 1.50) is used as a base material for the lens 40, and is provided thereon with a multi-layer coating constituted by a first layer 41 and second layer 42 shown in Table 3.

[Table 3]

| Constitution | Materials | Refractivity | Thickness(nm) | Optical thickness(nm) |
|---|---|---|---|---|
| Second layer 42 | $MgF_2$ | 1.37 | 196 | 268 |
| First layer 41 | $TiO_2$ | 2.20 | 302 | 665 |
| Lens 40 | BK7 | 1.50 | — | — |

The method for forming the multi-layer coating of Table 3 is not described here because it is almost same as the method described in Embodiment 1.

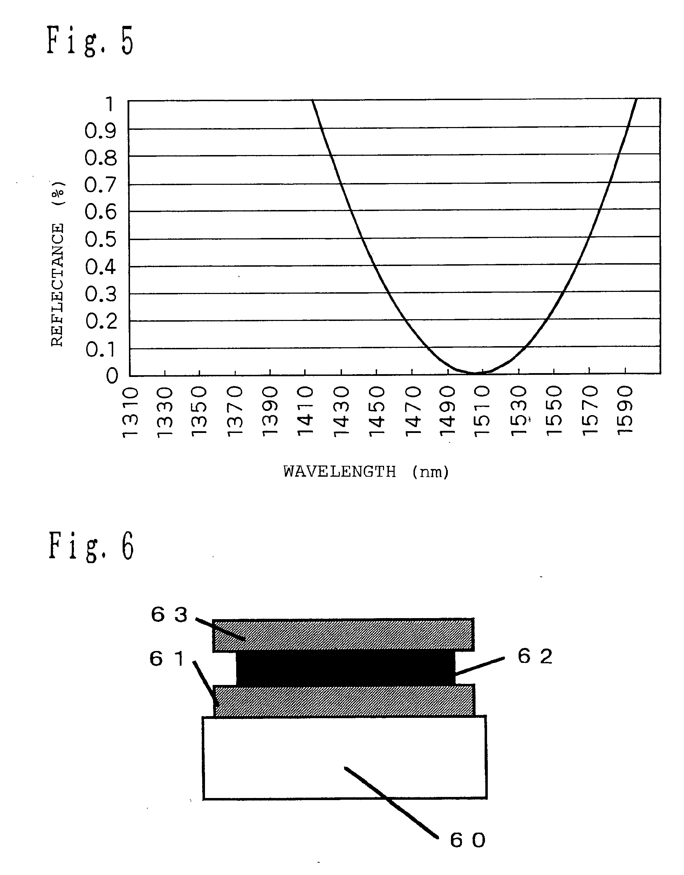

Figure 5 shows dependency of reflectance on wavelengths when light is vertically let in, with respect to the antireflection coating constituted by the first layer 41 and second layer 42 of Table 3.

As shown in Figure 5, the reflectance level is 0.5% or lower when the wavelength is in the range of from 1450 to 1560 nm. This reflectance level is low enough to ensure the practical use of the antireflection coating. In particular, the reflectance level is 0.05% or lower at a wavelength of 1510 nm.

The antireflection coating of Embodiment 2 is highly reliable because $TiO_2$ and $MgF_2$ having excellent chemical durability and mechanical strength are used as coating materials. Properties of samples made on an experimental basis were evaluated before and after they were subjected to heat shock tests at 80°C and -20°C and high temperature/humidity tests at 85°C and 95% RH, and as a result, it has been found that neither appearances nor optical properties of coatings were changed. This is due to the fact that for the antireflection coating of the present invention, internal stresses generating in the coating can be neutralized using predetermined tried-and-true materials and predetermined thickness. Furthermore, it is more desirable that the substrate is heated during formation of the coating as in this embodiment from a viewpoint of reliability, but it is also possible to coat the substrate at a normal temperature, and coatings can be applied to lenses made of plastic as well as various kinds of glass based lenses.

As described above, the antireflection coating of Embodiment 2 is excellent in optical property and reliability, and has only a small number of layers with two types of materials to reduce costs, and therefore if this coating is applied to optical components such as lenses, prisms, fibers and optical waveguides, very useful optical elements can be obtained.

In addition, the process for forming a coating is not limited to a vacuum coating process, and for example, a spattering process may be used.

As a result of more elaborate examinations , in the present invention, it has been found that even for a structure other than the structure described in this embodiment, a similar antireflection effect can be expected if the refractivity $n_0$ of the lens 40 is in the range of 1.42 to 1.53, the refractivity $n_1$ of the first layer 41 is in the range of 1.95 to 2.35, the optical thickness $d_1$ of the first layer 41 is in the range of $0.42\lambda$ to $0.46\lambda$ and the optical thickness $d_2$ of $MgF_2$ of the second layer 42 is in the range of 0.17 to $0.19\lambda$, wherein the central wavelength is $\lambda$ (nm) ($\lambda$=1510 nm for this embodiment) . For one specific example of the lens, Model No. S-FPL53 (refractivity of 1.43 at a wavelength of 1530 nm) manufactured by Ohara Co., Ltd. or Model No. S-BAL53 (refractivity of 1.52 at a wavelength of 1530 nm) manufactured by the same company may be used.

In Table 4 is shown as one example the reflectance level of the antireflection coating when the thickness of the first layer 41 and second layer 42 is changed in the case where the refractivity of the lens 40 is 1.50 (BK7), the first lay 41 provided on the lens 40 is a layer of $TiO_2$ with refractivity of 2.20, and the second layer 42 is a layer of $MgF_2$ with refractivity of 1.37.

[Table 4]

| $n_0$=1 . 50(BK7) $n_1$=2 . 20($TiO_2$) $n_2$=1 . 37($MgF_2$) $\lambda$ =1510nm | | | | | | |
|---|---|---|---|---|---|---|
| $d_1$ | $0.42\lambda$ | $0.42\lambda$ | $0.46\lambda$ | $0.46\lambda$ | $0.40\lambda$ | $0.40\lambda$ |
| $d_2$ | $0.17\lambda$ | $0.19\lambda$ | $0.17\lambda$ | $0.19\lambda$ | $0.17\lambda$ | $0.19\lambda$ |
| Refrectance(%) | 0.42 | 0.36 | 0.17 | 0.21 | 1.28 | 1.03 |
| $d_1$ | $0.48\lambda$ | $0.48\lambda$ | $0.42\lambda$ | $0.46\lambda$ | $0.42\lambda$ | $0.46\lambda$ |
| $d_2$ | $0.17\lambda$ | $0.19\lambda$ | $0.16\lambda$ | $0.16\lambda$ | $0.20\lambda$ | $0.20\lambda$ |
| Refrectance(%) | 0.81 | 0.74 | 0.61 | 0.24 | 0.49 | 0.31 |

As shown in Table 4, it can be understood that when the thickness $d_1$ of the first layer 41 is in the range of $0.42\lambda$ to $0.46\lambda$, and the thickness $d_2$ of the second layer 42 is in the range of $0.17\lambda$ to $0.19\lambda$, the reflectance level is equal to or lower than 0.5%, thus making it possible to obtain an excellent antireflection effect. Furthermore, a similar effect can be obtained as long as the refractivity of the first layer 41 is in the range of 1.95 to 2.35 even if it takes on a value other than 2.20.

This also reflects the following concept. That is, the values of thicknesses $d_1$ and $d_2$ giving a reflectance level of 0.5% or lower have certain ranges, and therefore if $d_1$ is set to $0.44\lambda$ and $d_2$ is set to $0.18\lambda$ as optimum values for production, for example, the resulting coating can provide a sufficient antireflection effect even if the thickness $d_1$ suffers production based variations of $\pm 0.02\lambda$ and the thickness $d_2$ suffers production based variations of $\pm 0.01\lambda$.

When the coating is produced based on a conventional technique, the thicknesses $d_1$ and $d_2$ satisfying appropriate conditions as to the reflectance level must be defined as a unique pair of optimum values giving the best reflectance level, and thus an antireflection coating with layer thickness deviating from the defined values may be considered as a defective item even if the deviation from the optimum value is very small, resulting in a drop in yield during production.

In this embodiment, however, conditions for thickness with respect to a optimum value of reflectance are defined as certain ranges of values, whereby the coating can be produced in anticipation of variations in thickness during production, resulting in enhanced yields during production.

Furthermore, in this embodiment, the case where a wavelength of 1510 nm is applied has been described, but an antireflection coating having same optical properties can be obtained with any wavelength if optical thickness is increased or decreased in proportion to the wavelength with absorptivity and refractivity kept unchanged. For $TiO_2$ and $MgF_2$, absorptivity is kept at almost 0 through the visible region to the near infrared region, and the magnitude of dispersion of refractivity by wavelengths is small, thus making it possible to obtain an antireflection coating reflecting light through the visible region to the near infrared region only by changing thickness depending on wavelengths.

In addition, $TiO_2$ is used as a coating material for the first layer 41 in this embodiment, but the first layer 41 may be formed using any of $TiO_2$, $Ta_2O_5$, $ZrO_2$ and ZnS or a material constituted by a combination thereof, and in this case, an antireflection coating having a similar function can be obtained.

(Embodiment 3)

Embodiment 3 in the present invention will be described with reference to the drawings.

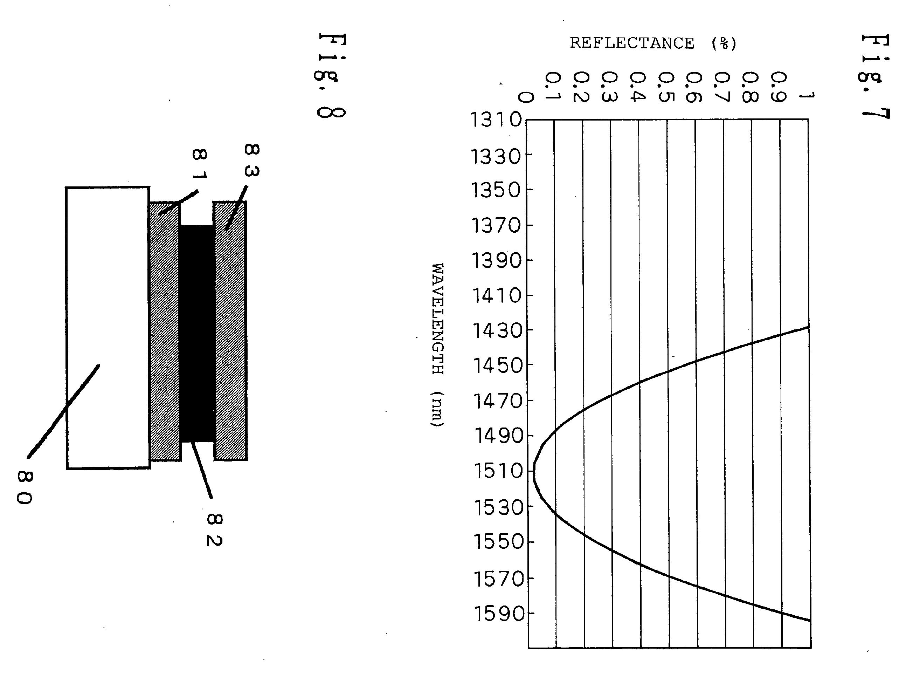

Figure 6 is a sectional view of an antireflection coating provided on the surface of a lens 60 corresponding to a substantially transparent substrate with refractivity of $h_0$ of the present invention. The coating has a very simple structure, and the productivity is enhanced.

BK7 (with refractivity of 1.50) is used as a base material for the lens 60, and is provided thereon with a multi-layer coating constituted by a first layer 61, second layer 62 and third layer 63 shown in Table 5.

[Table 5]

| Constitution | Materials | Refractivity | Thickness(nm) | Optical thickness(nm) |
|---|---|---|---|---|
| Third layer63 | $SiO_2$ | 1.44 | 182 | 261 |
| Second layer 62 | $TiO_2$ | 2.20 | 295 | 649 |
| First layer 61 | $SiO_2$ | 1.44 | 63 | 91 |
| Lens 60 | BK7 | 1.50 | — | — |

The method for forming the multi-layer coating of Table 5 is not described here because it is almost same as the method described in Embodiment 1.

Figure 7 shows dependency of reflectance on wavelengths when light is vertically let in, with respect to the antireflection coating constituted by the first layer 61, second layer 62 and third layer 63 of Table 5.

As shown in Figure 7, the reflectance level is 0.5% or lower when the wavelength is in the range of from 1460 to 1570 nm. This reflectance level is low enough to ensure the practical use of the antireflection coating. In particular, the reflectance level is 0.05% or lower at a wavelength of 1510 nm.

The antireflection coating of Embodiment 3 is highly reliable because $TiO_2$ and $SiO_2$ having excellent chemical durability and mechanical strength are used as coating materials. Properties of samples made on an experimental basis were evaluated before and after they were subjected to heat shock tests at 80°C and -20°C and high temperature/humidity tests at 85°C and 95% RH, and as a result, it has been found that neither appearances nor optical properties of coatings were changed. This is due to the fact that for the antireflection coating of the present invention, internal stresses generating in the coating can be neutralized using predetermined tried-and-true materials and predetermined thickness. Furthermore, it is desirable that the substrate is heated during formation of the coating as in this embodiment from a viewpoint of reliability, but it is also possible to coat the substrate at a normal temperature, and coatings can be applied to lenses made of plastic as well as various kinds of glass based lenses.

As described above, the antireflection coating of the Embodiment 3 is excellent in optical property and reliability, and has only a small number of layers with two types of materials resulting in inexpensiveness, and therefore if this coating is applied to optical components such as lenses, prisms, fibers and optical waveguides, very useful optical elements can be obtained.

In addition, the process for forming a coating is not limited to a vacuum coating process, and for example, a spattering process may be used.

As a result of more detailed considerations, in the present invention, it has been found that even for a structure other than the structure described in this embodiment, a similar antireflection effect can be expected if the refractivity $n_0$ of the lens 60 is in the range of 1.42 to 1.53, the optical thickness $d_1$ of $SiO_2$ of the first layer 61 is in the range of $0.06\lambda$ to $0.07\lambda$, wherein the central wavelength is $\lambda$ (nm) ($\lambda$= 1510 nm for this embodiment), the refractivity $n_2$ of the second layer 62 is in the range of 1.95 to 2.35, the optical thickness $d_2$ of the second layer 62 is in the range of $0.41\lambda$ to $0.45\lambda$ and the optical thickness $d_3$ of $SiO_2$ of the third layer 63 is in the range of 0.16 to $0.18\lambda$. For one specific example of the lens, Model No. S-FPL53 (refractivity of 1.43 at a wavelength of 1530 nm) manufactured by Ohara Co., Ltd. or Model No. S-BAL53 (refractivity of 1.52 at a wavelength of 1530 nm) manufactured by the same company may be used.

In Table 6 is shown as one example the reflectance level of the antireflection coating when the thicknesses of the first layer 61, second layer 62 and third layer 63 are changed in the case where the refractivity of the lens 60 is 1.50 (BK7), the first lay 61 and third layer 63 provided on the lens 60 are layers of $SiO_2$ with refractivity of 1.44, and the second layer 62 is a layer of $TiO_2$ with refractivity of 2.20.

[Table 6]

| $n_0$=1 . 50(BK7) $n_2$=2 . 20($TiO_2$) $n_1$=$n_3$=1 . 44($SiO_2$) $\lambda$=1510nm | | | | | | | | |
|---|---|---|---|---|---|---|---|---|
| $d_1$ | 0. 06 λ | 0. 06 λ | 0. 06 λ | 0. 06 λ | 0. 07 λ | 0. 07 λ | 0. 07 λ | 0. 07 λ |
| $d_2$ | 0. 41 λ | 0. 41 λ | 0. 45 λ | 0. 45 λ | 0. 41 λ | 0. 41 λ | 0. 45 λ | 0. 45 λ |
| $d_3$ | 0. 16 λ | 0. 18 λ | 0. 16 λ | 0. 18 λ | 0. 16 λ | 0. 18 λ | 0. 16 λ | 0. 18 λ |
| Refrectance(%) | 0.56 | 0.29 | 0.15 | 0.28 | 0.59 | 0.31 | 0.13 | 0.28 |
| $d_1$ | 0. 05 λ | 0. 05 λ | 0. 05 λ | 0. 05 λ | 0. 08 λ | 0. 08 λ | 0. 08 λ | 0. 08 λ |
| $d_2$ | 0. 41 λ | 0. 41 λ | 0. 45 λ | 0. 45 λ | 0. 41 λ | 0. 41 λ | 0. 45 λ | 0. 45 λ |
| $d_3$ | 0. 16 λ | 0. 18 λ | 0. 16 λ | 0. 18 λ | 0. 16 λ | 0. 18 λ | 0. 16 λ | 0. 18 λ |
| Refrectance(%) | 0.54 | 0.26 | 0.17 | 0.29 | 0.61 | 0.34 | 0.12 | 0.28 |
| $d_1$ | 0. 06 λ | 0. 06 λ | 0. 06 λ | 0. 06 λ | 0. 07 λ | 0. 07 λ | 0. 07 λ | 0. 07 λ |
| $d_2$ | 0. 39 λ | 0. 39 λ | 0. 47 λ | 0. 47 λ | 0. 39 λ | 0. 39 λ | 0. 47 λ | 0. 47 λ |
| $d_3$ | 0. 16 λ | 0. 18 λ | 0. 16 λ | 0. 18 λ | 0. 16 λ | 0. 18 λ | 0. 16 λ | 0. 18 λ |
| Refrectance(%) | 1.57 | 0.94 | 0.78 | 0.93 | 1.62 | 0.99 | 0.75 | 0.92 |
| $d_1$ | 0. 06 λ | 0. 06 λ | 0. 06 λ | 0. 06 λ | 0. 07 λ | 0. 07 λ | 0. 07 λ | 0. 07 λ |
| $d_2$ | 0. 41 λ | 0. 41 λ | 0. 45 λ | 0. 45 λ | 0. 41 λ | 0. 41 λ | 0. 45 λ | 0. 45 λ |
| $d_3$ | 0.15 λ | 0. 19 λ | 0. 15 λ | 0. 19 λ | 0. 15 λ | 0. 19 λ | 0. 15 λ | 0. 19 λ |
| Refrectance(%) | 0.91 | 0.36 | 0.21 | 0.47 | 0.93 | 0.39 | 0.19 | 0.48 |

As shown in Table 6, it can be understood that when the thickness $d_1$ of the first layer 61 is in the range of $0.06\lambda$ to $0.07\lambda$, the thickness $d_2$ of the second layer 62 is in the range of $0.41\lambda$ to $0.45\lambda$, and the thickness $d_3$ of the third layer 63 is in the range of $0.16\lambda$ to $0.18\lambda$, the reflectance level is equal to or lower than 0.6%, thus making it possible to obtain an excellent antireflection effect. Furthermore, a similar effect can be obtained as long as the refractivity of the second layer 62 is in the range of 1.95 to 2.35 even if it takes on a value other than 2.20.

This also reflects the following concept. That is, the values of thicknesses $d_1$, $d_2$ and $d_3$ giving a reflectance level of 0.5% or lower have certain ranges, and therefore if $d_1$ is set to $0.065\lambda$ and $d_2$ is set to $0.43\lambda$ and $d_3$ is set to $0.17\lambda$ as optimum values for production, for example, the resulting coating can provide a sufficient antireflection effect even if the thickness $d_1$ suffers production based variations of $\pm0.005\lambda$, the thickness $d_2$ suffers production based variations of $\pm0.02\lambda$ and the thickness $d_3$ suffers production based variations of $\pm0.01\lambda$.

When the coating is produced based on a conventional technique, the thicknesses $d_1$ to $d_3$ satisfying appropriate conditions as to the reflectance level must be defined as a unique pair of optimum values giving the best reflectance level, and thus an antireflection coating with layer thickness deviating from the defined values may be considered as a defective item even if the deviation from the optimum value is very small, resulting in a drop in yield during production.

In this embodiment, however, conditions for thickness with respect to an optimum value of reflectance are defined as certain ranges of values, whereby the coating can be produced in anticipation of variations in thickness during production, resulting in enhanced yields during production.

Furthermore, in this embodiment, the case where a wavelength of 1510 nm is applied has been described, but an antireflection coating having same optical properties can be obtained with any wavelength if optical thickness is increased or decreased in proportion to the wavelength with absorptivity and refractivity kept unchanged. For $TiO_2$ and $SiO_2$, absorptivity is kept at almost 0 through the visible region to the near infrared region, and the magnitude of dispersion of refractivity by wavelengths is small, thus making it possible to obtain an antireflection coating reflecting light through the visible region to the near infrared region only by changing thickness depending on wavelengths.

In addition, $TiO_2$ is used as a coating material for the second layer 62 in this embodiment, but the second layer 62 may be formed using any of $TiO_2$, $Ta_2O_5$, $ZrO_2$ and $ZnS$ or a material constituted by a combination thereof, and in this case, an antireflection coating having a similar function can be obtained.

(Embodiment 4)

Embodiment 4 in the present invention will be described with reference to the drawings.

Figure 8 is a sectional view of an antireflection coating provided on the surface of a lens 80 corresponding to a substantially transparent substrate with refractivity of $h_0$ of the present invention. The coating has a very simple structure, and the productivity is enhanced.

BK7 (with refractivity of 1.50) is used as a base material for the lens 80, and is provided thereon with a multilayer coating constituted by a first layer 81, second layer 82 and third layer 83 shown in Table 7.

[Table 7]

| Constitution | Materials | Refractivity | Thickness(nm) | Optical thickness(nm) |
|---|---|---|---|---|
| Third layer 83 | $MgF_2$ | 1.37 | 188 | 257 |
| Second layer 82 | $TiO_2$ | 2.20 | 310 | 683 |
| First layer 81 | $MgF_2$ | 1.37 | 58 | 79 |
| Lens 80 | BK7 | 1.50 | — | — |

The method for forming the multi-layer coating of Table 7 is not described here because it is almost same as the method described in Embodiment 1.

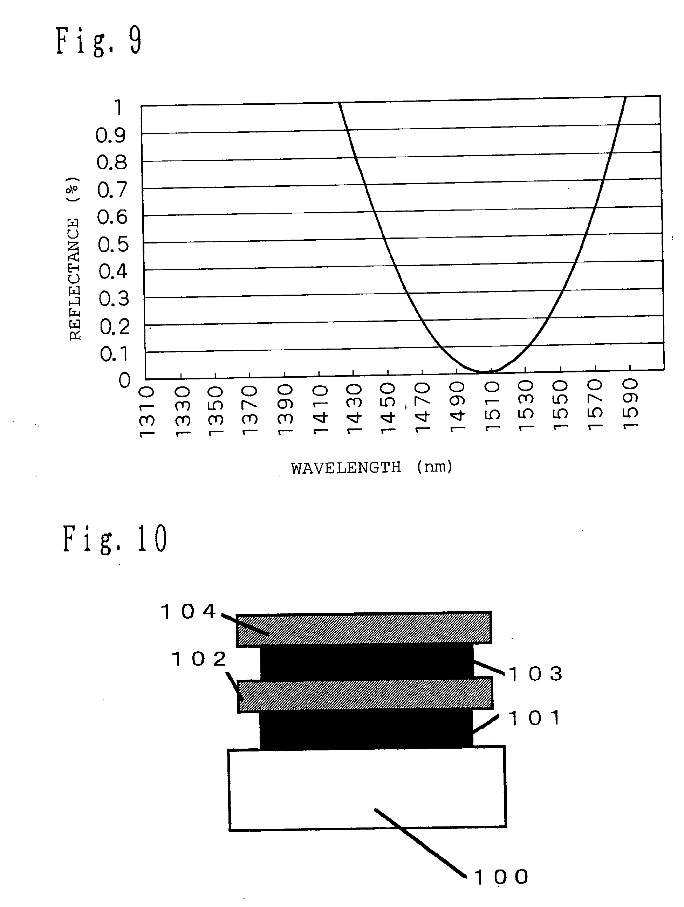

Figure 9 shows dependency of reflectance on wavelengths when light is vertically let in, with respect to the antireflection coating constituted by the first layer 81, second layer 82 and third layer 83 of Table 7.

As shown in Figure 9, the reflectance level is 0.5% or lower when the wavelength is in the range of from 1450 to 1560 nm. This reflectance level is low enough to ensure the practical use of the antireflection coating. In particular, the reflectance level is 0.05% or lower at a wavelength of 1510 nm.

The antireflection coating of Embodiment 4 is highly reliable because $TiO_2$ and $MgF_2$ having excellent chemical durability and mechanical strength are used as coating materials. Properties of samples made on an experimental basis were evaluated before and after they were subjected to heat shock tests at 80°C and -20°C and high temperature/humidity tests at 85°C and 95% RH, and as a result, it has been found that neither appearances nor optical properties of coatings were changed.

This is due to the fact that for the antireflection coating of the present invention, internal stresses generated in the coating can be neutralized using predetermined tried-and-true materials and predetermined thickness. Furthermore, it is desirable that the substrate is heated during formation of the coating as in this embodiment from a viewpoint of reliability, but it is also possible to coat the substrate at a normal temperature, and coatings can be applied to lenses made of plastic as well as various kinds of glass based lenses.

As described above, the antireflection coating of the Embodiment 4 is excellent in optical property and reliability, and has only a small number of layers with two types of materials resulting in inexpensiveness, and therefore if this coating is applied to optical components such as lenses, prisms, fibers and optical waveguides, very useful optical elements can be obtained.

In addition, the process for forming a coating is not limited to a vacuum coating process, and for example, a spattering process may be used.

As a result of more detailed considerations, in the present invention, it has been found that even for a structure other than the structure described in this embodiment, a similar antireflection effect can be expected if the refractivity $n_0$ of the lens 80 is in the range of 1.42 to 1.53, the optical thickness $d_1$ of $MgF_2$ of the first layer 81 is in the range of $0.05\lambda$ to $0.07\lambda$, wherein the central wavelength is $\lambda$ (nm) ($\lambda$= 1510 nm for this embodiment), the refractivity $n_2$ of the second layer 82 is in the range of 1.95 to 2.35, the optical thickness $d_2$ of the second layer 82 is in the range of $0.43\lambda$ to $0.46\lambda$ and the optical thickness $d_3$ of $MgF_2$ of the third layer 83 is in the range of $0.16\lambda$ to $0.19\lambda$. For one specific example of the lens, Model No. S-FPL53 (refractivity of 1.43 at a wavelength of 1530 nm) manufactured by Ohara Co., Ltd. or Model No. S-BAL53 (refractivity of 1.52 at a wavelength of 1530 nm) manufactured by the same company may be used.

In Table 8 is shown as one example the reflectance level of the antireflection coating when the thicknesses of the first layer 81, second layer 82 and third layer 83 are changed in the case where the refractivity of the lens 80 is 1.50 (BK7), the first layer 81 and third layer 83 provided on the lens 80 are layers of $MgF_2$ with refractivity of 1.37, and the second layer 82 is a layer of $TiO_2$ with refractivity of 2.20.

[Table 8]

| $n_0$=1.50(BK7) $n_2$=2.20($TiO_2$) $n_1$=$n_3$=1.37($MgF_2$) $\lambda$=1510nm | | | | | | | | |
|---|---|---|---|---|---|---|---|---|
| $d_1$ | $0.05\lambda$ | $0.05\lambda$ | $0.05\lambda$ | $0.05\lambda$ | $0.07\lambda$ | $0.07\lambda$ | $0.07\lambda$ | $0.07\lambda$ |
| $d_2$ | $0.43\lambda$ | $0.43\lambda$ | $0.46\lambda$ | $0.46\lambda$ | $0.43\lambda$ | $0.43\lambda$ | $0.46\lambda$ | $0.46\lambda$ |
| $d_3$ | $0.16\lambda$ | $0.19\lambda$ | $0.16\lambda$ | $0.19\lambda$ | $0.16\lambda$ | $0.19\lambda$ | $0.16\lambda$ | $0.19\lambda$ |
| Refrectance(%) | 0.59 | 0.45 | 0.06 | 0.15 | 0.7 | 0.61 | 0.02 | 0.21 |
| $d_1$ | $0.04\lambda$ | $0.04\lambda$ | $0.04\lambda$ | $0.04\lambda$ | $0.08\lambda$ | $0.08\lambda$ | $0.08\lambda$ | $0.08\lambda$ |
| $d_2$ | $0.43\lambda$ | $0.43\lambda$ | $0.46\lambda$ | $0.46\lambda$ | $0.43\lambda$ | $0.43\lambda$ | $0.46\lambda$ | $0.46\lambda$ |
| $d_3$ | $0.16\lambda$ | $0.19\lambda$ | $0.16\lambda$ | $0.19\lambda$ | $0.16\lambda$ | $0.19\lambda$ | $0.16\lambda$ | $0.19\lambda$ |
| Refrectance(%) | 0.54 | 0.37 | 0.09 | 0.14 | 0.75 | 0.69 | 0.01 | 0.26 |
| $d_1$ | $0.05\lambda$ | $0.05\lambda$ | $0.05\lambda$ | $0.05\lambda$ | $0.07\lambda$ | $0.07\lambda$ | $0.07\lambda$ | $0.07\lambda$ |
| $d_2$ | $0.41\lambda$ | $0.41\lambda$ | $0.48\lambda$ | $0.48\lambda$ | $0.41\lambda$ | $0.41\lambda$ | $0.48\lambda$ | $0.48\lambda$ |
| $d_3$ | $0.16\lambda$ | $0.19\lambda$ | $0.16\lambda$ | $0.19\lambda$ | $0.16\lambda$ | $0.19\lambda$ | $0.16\lambda$ | $0.19\lambda$ |
| Refrectance(%) | 1.65 | 1.16 | 0.46 | 0.5 | 1.87 | 1.41 | 0.35 | 0.52 |
| $d_1$ | $0.05\lambda$ | $0.05\lambda$ | $0.05\lambda$ | $0.05\lambda$ | $0.07\lambda$ | $0.07\lambda$ | $0.07\lambda$ | $0.07\lambda$ |
| $d_2$ | $0.43\lambda$ | $0.43\lambda$ | $0.46\lambda$ | $0.46\lambda$ | $0.43\lambda$ | $0.43\lambda$ | $0.46\lambda$ | $0.46\lambda$ |
| $d_3$ | $0.15\lambda$ | $0.20\lambda$ | $0.15\lambda$ | $0.20\lambda$ | $0.15\lambda$ | $0.20\lambda$ | $0.15\lambda$ | $0.20\lambda$ |
| Refrectance(%) | 0.86 | 0.62 | 0.18 | 0.33 | 0.96 | 0.81 | 0.11 | 0.43 |

As shown in Table 8, it can be understood that when the thickness $d_1$ of the first layer 81 is in the range of $0.05\lambda$ to $0.07\lambda$, the thickness $d_2$ of the second layer 82 is in the range of $0.43\lambda$ to $0.46\lambda$, and the thickness $d_3$ of the third layer 83 is in the range of $0.16\lambda$ to $0.19\lambda$, the reflectance level is equal to or lower than 0.8%, thus making it possible to obtain an excellent antireflection effect. Furthermore, a similar effect can be obtained as long as the refractivity of the second layer 82 is in the range of 1.95 to 2.35 even if it takes on a value other than 2.20.

This also reflects the following concept. That is, the values of thicknesses $d_1$, $d_2$ and $d_3$ giving a reflectance level of 0.8% or lower have certain ranges, and therefore if $d_1$ is set to $0.06\lambda$ and $d_2$ is set to $0.445\lambda$ and $d_3$ is set to $0.175\lambda$ as optimum values for production, for example, the resulting coating can provide a sufficient antireflection effect even if the thickness $d_1$ suffers production based variations of $\pm 0.01\lambda$, the thickness $d_2$ suffers production based variations of $\pm 0.015\lambda$ and the thickness $d_3$ suffers production based variations of $\pm 0.01\lambda$.

When the coating is produced based on a conventional technique, the thicknesses $d_1$ and $d_2$ satisfying appropriate conditions as to the reflectance level must be defined as a unique pair of optimum values giving the best reflectance level, and thus an antireflection coating with layer thickness deviating from the defined values may be considered as a defective item even if the deviation from the optimum value is very small, resulting in a drop in yield during production.

In this embodiment, however, conditions for thickness with respect to an optimum value of reflectance are defined as certain ranges of values, whereby the coating can be produced in anticipation of variations in thickness during production, resulting in enhanced yields during production.

Furthermore, in this embodiment, the case where a wavelength of 1510 nm is applied has been described, but an antireflection coating having same optical properties can be obtained with any wavelength if optical thickness is increased or decreased in proportion to the wavelength with absorptivity and refractivity kept unchanged. For $TiO_2$ and $MgF_2$, absorptivity is kept at almost 0 through the visible region to the near infrared region, and the magnitude of dispersion of refractivity by wavelengths is small, thus making it possible to obtain an antireflection coating reflecting light through the visible region to the near infrared region only by changing thickness depending on wavelengths.

In addition, $TiO_2$ is used as a coating material for the second layer 82 in this embodiment, but the second layer 82 may be formed using any of $TiO_2$, $Ta_2O_5$, $ZrO_2$ and ZnS or a material constituted by a combination thereof, and in this case, an antireflection coating having a similar function can be obtained.

(Embodiment 5)

Embodiment 5 in the present invention will be described with reference to the drawings.

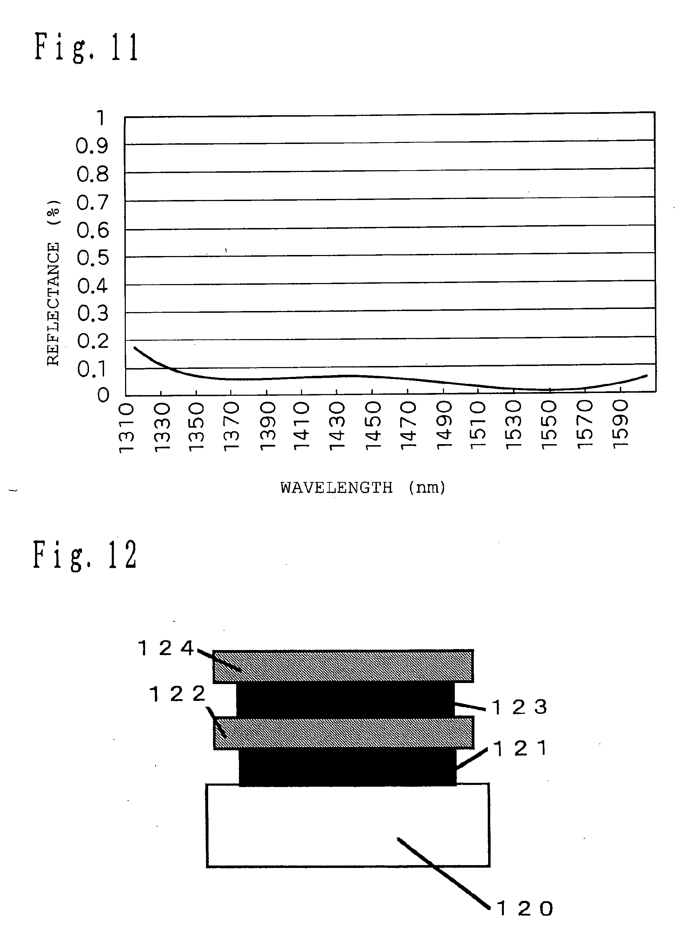

Figure 10 is a sectional view of an antireflection coating provided on the surface of a lens 100 corresponding to a substantially transparent substrate with refractivity of $h_0$ of the present invention. The coating has a very simple structure, and the productivity is enhanced.

BK7 (with refractivity of 1.50) is used as a base material for the lens 100, and is provided thereon with a multi-layer coating constituted by a first layer 101, second layer 102, third layer 103 and a fourth layer 104 shown in Table 9.

[Table 9]

| Constitution | Materials | Refractivity | Thickness(nm) | Optical thickness(nm) |
|---|---|---|---|---|
| Fourth layer 104 | $SiO_2$ | 1.44 | 265 | 381 |
| Third layer 103 | $TiO_2$ | 2.20 | 168 | 370 |
| Second layer 102 | $SiO_2$ | 1.44 | 69 | 99 |
| First layer 101 | $TiO_2$ | 2.20 | 71 | 155 |
| Lens 100 | BK7 | 1.50 | — | — |

The method for forming the multi-layer coating of Table 9 is not described here because it is almost same as the method described in Embodiment 1.

Figure 11 shows dependency of reflectance on wavelengths when light is vertically let in, with respect to the antireflection coating constituted by the first layer 101, second layer 102, third layer 103 and fourth layer 104 of Table 9.

As shown in Figure 11, the reflectance level is 0.1% or lower when the wavelength is in the range of from 1330 to 1600 nm. This shows that the antireflection coating shown in Figure 10 has an excellent antireflection effect for a very wide range of wavelengths. In this way, because the antireflection effect is retained even if the thickness is more or less deviated from a predefined thickness, a margin of production is increased to provide an advantage in terms of costs. Even in the case of a lens having a large curvature, the antireflection effect can be obtained for the entire lens, thus providing an advantage in terms of performance.

The antireflection coating of Embodiment 5 is highly reliable because $TiO_2$ and $SiO_2$ having excellent chemical durability and mechanical strength are used as coating materials. Properties of samples made on an experimental basis were evaluated before and after they were subjected to heat shock tests at 80°C and -20°C and high temperature/humidity tests at 85°C and 95% RH, and as a result, it has been found that neither appearances nor optical properties of coatings were changed.

This is due to the fact that for the antireflection coating of the present invention, internal stresses generating in the coating can be neutralized using predetermined tried-and-true materials and predetermined thickness. Furthermore, it is desirable that the substrate is heated during formation of the coating as in this embodiment from a viewpoint of reliability, but it is also possible to coat the substrate at a normal temperature, and coatings can be applied to lenses made of plastic as well as various kinds of glass based lenses.

As described above, the antireflection coating of the Embodiment 5 is excellent in optical property and reliability, and has only a small number of layers with two types of materials resulting in inexpensiveness, and therefore if this coating is applied to optical components such as lenses, prisms, fibers and optical waveguides, very useful optical elements can be obtained.

In addition, the process for forming a coating is not limited to a vacuum coating process, and for example, a spattering process may be used.

As a result of more detailed considerations , in the present invention, it has been found that even for a structure other than the structure described in this embodiment, a similar antireflection effect can be expected if the refractivity $n_0$ of the lens 100 as a substrate is in the range of 1.42 to 1.53, the refractivity $n_1$ of the first layer 101 is in the range of 1.95 to 2.35, the optical thickness $d_1$ of the first layer 101 is in the range of $0.08\lambda$ to $0.11\lambda$, wherein the central wavelength is $\lambda$ (nm) ($\lambda$= 1510 nm for this embodiment), the optical thickness $d_2$ of $SiO_2$ the second layer 102 is in the range of $0.06\lambda$ to $0.07\lambda$, the refractivity $n_3$ of the third layer 103 is in the range of 1.95 to 2.35, the optical thickness $d_3$ of the third layer 103 is in the range of $0.24\lambda$ to $0.26\lambda$, and the optical thickness $d_4$ of $SiO_2$ of the fourth layer 104 is in the range of $0.24\lambda$ to $0.26\lambda$. For one specific example of the lens, Model No. S-FPL53 (refractivity of 1.43 at a wavelength of 1530 nm) manufactured by Ohara Co., Ltd. or Model No. S-BAL53 (refractivity of 1.52 at a wavelength of 1530 nm) manufactured by the same company may be used.

In Table 10 is shown as one example the reflectance level of the antireflection coating when the thicknesses of the first layer 101, second layer 102, third layer 103 and fourth layer 104 are changed in the case where the refractivity of the lens 100 is 1.50 (BK7), the first layer 101 and third layer 103 provided on the lens 100 are layers of $TiO_2$ with refractivity of 2.20, and the second layer 102 and fourth layer 104 are layers of $SiO_2$ with refractivity of 2.20.

[Table 10]

| $n_0==1.50(BK7)$   $n_2=n_4=1.44(SiO_2)$ $n_1=n_3=2.20(TiO_2)$   $\lambda=1510nm$ | | | | | | | | | | |
|---|---|---|---|---|---|---|---|---|---|---|
| $d_1$ | $0.08\lambda$ | $0.08\lambda$ | $0.08\lambda$ | $0.08\lambda$ | $0.08\lambda$ | $0.08\lambda$ | $0.08\lambda$ | $0.08\lambda$ | $0.11\lambda$ | $0.11\lambda$ |
| $d_2$ | $0.06\lambda$ | $0.06\lambda$ | $0.06\lambda$ | $0.06\lambda$ | $0.07\lambda$ | $0.07\lambda$ | $0.07\lambda$ | $0.07\lambda$ | $0.06\lambda$ | $0.06\lambda$ |
| $d_3$ | $0.24\lambda$ | $0.24\lambda$ | $0.26\lambda$ | $0.26\lambda$ | $0.24\lambda$ | $0.24\lambda$ | $0.26\lambda$ | $0.26\lambda$ | $0.24\lambda$ | $0.24\lambda$ |
| $d_4$ | $0.24\lambda$ | $0.26\lambda$ | $0.24\lambda$ | $0.26\lambda$ | $0.24\lambda$ | $0.26\lambda$ | $0.24\lambda$ | $0.26\lambda$ | $0.24\lambda$ | $0.26\lambda$ |
| Refrectance (%) | 0.29 | 0.61 | 0.21 | 0.59 | 0.23 | 0.33 | 0.19 | 0.33 | 0.04 | 0.17 |
| $d_1$ | $0.11\lambda$ | $0.11\lambda$ | $0.11\lambda$ | $0.11\lambda$ | $0.11\lambda$ | $0.11\lambda$ | $0.07\lambda$ | $0.07\lambda$ | $0.07\lambda$ | $0.07\lambda$ |
| $d_2$ | $0.06\lambda$ | $0.06\lambda$ | $0.07\lambda$ | $0.07\lambda$ | $0.07\lambda$ | $0.07\lambda$ | $0.06\lambda$ | $0.06\lambda$ | $0.06\lambda$ | $0.06\lambda$ |
| $d_3$ | $0.26\lambda$ | $0.26\lambda$ | $0.24\lambda$ | $0.24\lambda$ | $0.26\lambda$ | $0.26\lambda$ | $0.24\lambda$ | $0.24\lambda$ | $0.26\lambda$ | $0.26\lambda$ |
| $d_4$ | $0.24\lambda$ | $0.26\lambda$ | $0.24\lambda$ | $0.26\lambda$ | $0.24\lambda$ | $0.26\lambda$ | $0.24\lambda$ | $0.26\lambda$ | $0.24\lambda$ | $0.26\lambda$ |
| Refrectance (%) | 0.09 | 0.1 | 0.23 | 0.04 | 0.33 | 0.03 | 0.62 | 0.96 | 0.5 | 0.94 |
| $d_1$ | $0.07\lambda$ | $0.07\lambda$ | $0.07\lambda$ | $0.07\lambda$ | $0.12\lambda$ | $0.12\lambda$ | $0.12\lambda$ | $0.12\lambda$ | $0.12\lambda$ | $0.12\lambda$ |
| $d_2$ | $0.07\lambda$ | $0.07\lambda$ | $0.07\lambda$ | $0.07\lambda$ | $0.06\lambda$ | $0.06\lambda$ | $0.06\lambda$ | $0.06\lambda$ | $0.07\lambda$ | $0.07\lambda$ |
| $d_3$ | $0.24\lambda$ | $0.24\lambda$ | $0.26\lambda$ | $0.26\lambda$ | $0.24\lambda$ | $0.24\lambda$ | $0.26\lambda$ | $0.26\lambda$ | $0.24\lambda$ | $0.24\lambda$ |

[Table 10]   (continued)

| | | | | | | | | | | |
|---|---|---|---|---|---|---|---|---|---|---|
| $d_4$ | 0. 24 λ | 0. 26 λ | 0. 24 λ | 0. 26 λ | 0. 24 λ | 0. 26 λ | 0. 24 λ | 0. 26 λ | 0. 24 λ | 0. 26 λ |
| Refrectance (%) | 0.5 | 0.65 | 0.42 | 0.66 | 0.2 | 0.2 | 0.29 | 0.13 | 0.51 | 0.17 |
| $d_1$ | 0. 12 λ | 0. 12 λ | 0. 08 λ | 0. 08 λ | 0. 08 λ | 0. 08 λ | 0. 08 λ | 0. 08 λ | 0. 08 λ | 0. 08 λ |
| $d_2$ | 0. 07 λ | 0. 07 λ | 0. 05 λ | 0. 05 λ | 0. 05 λ | 0. 05 λ | 0. 08 λ | 0. 08 λ | 0. 08 λ | 0. 08 λ |
| $d_3$ | 0. 26 λ | 0. 26 λ | 0. 24 λ | 0. 24 λ | 0. 26 λ | 0. 26 λ | 0. 24 λ | 0. 24 λ | 0. 26 λ | 0. 26 λ |
| $d_4$ | 0. 24 λ | 0. 26 λ | 0. 24 λ | 0. 26 λ | 0. 24 λ | 0. 26 λ | 0. 24 λ | 0. 26 λ | 0. 24 λ | 0. 26 λ |
| Refrectance (%) | 0.66 | 0.16 | 0.53 | 1.08 | 0.4 | 1.01 | 0.32 | 0.19 | 0.32 | 0.23 |
| $d_1$ | 0. 11 λ | 0. 11 λ | 0. 11 λ | 0. 11 λ | 0. 11 λ | 0. 11 λ | 0. 11 λ | 0. 11 λ | 0. 08 λ | 0. 08 λ |
| $d_2$ | 0. 05 λ | 0. 05 λ | 0. 05 λ | 0. 05 λ | 0. 08 λ | 0. 08 λ | 0. 08 λ | 0. 08 λ | 0. 06 λ | 0. 06 λ |
| $d_3$ | 0. 24 λ | 0. 24 λ | 0. 26 λ | 0. 26 λ | 0. 24 λ | 0. 24 λ | 0. 26 λ | 0. 26 λ | 0. 23 λ | 0. 23 λ |
| $d_4$ | 0. 24 λ | 0. 26 λ | 0. 24 λ | 0. 26 λ | 0. 24 λ | 0. 26 λ | 0. 24 λ | 0. 26 λ | 0. 24 λ | 0. 26 λ |
| Refrectance (%) | 0.07 | 0.5 x | 0.05 | 0.38 | 0.64 | 0.13 | 0.79 | 0.18 | 0.34 | 0.64 |
| $d_1$ | 0. 08 λ | 0. 08 λ | 0. 08 λ | 0. 08 λ | 0. 08 λ | 0. 08 λ | 0. 11 λ | 0. 11 λ | 0. 11 λ | 0. 11 λ |
| $d_2$ | 0. 06 λ | 0. 06 λ | 0. 07 λ | 0. 07 λ | 0. 07 λ | 0. 07 λ | 0. 06 λ | 0. 06 λ | 0. 06 λ | 0. 06 λ |
| $d_3$ | 0. 27 λ | 0. 27 λ | 0. 23 λ | 0. 23 λ | 0. 27 λ | 0. 27 λ | 0. 23 λ | 0. 23 λ | 0. 27 λ | 0. 27 λ |
| $d_4$ | 0. 24 λ | 0. 26 λ | 0. 24 λ | 0. 26 λ | 0. 24 λ | 0. 26 λ | 0. 24 λ | 0. 26 λ | 0. 24 λ | 0. 26 λ |
| Refrectance (%) | 0.18 | 0.56 | 0.24 | 0.33 | 0.17 | 0.32 | 0.02 | 0.21 | 0.12 | 0.07 |
| $d_1$ | 0. 11 λ | 0. 11 λ | 0. 11 λ | 0. 11 λ | 0. 08 λ | 0. 08 λ | 0. 08 λ | 0. 08 λ | 0. 08 λ | 0. 08 λ |
| $d_2$ | 0. 07 λ | 0. 07 λ | 0. 07 λ | 0. 07 λ | 0. 06 λ | 0. 06 λ | 0. 06 λ | 0. 06 λ | 0. 07 λ | 0. 07 λ |
| $d_3$ | 0. 23 λ | 0. 23 λ | 0. 27 λ | 0. 27 λ | 0. 24 λ | 0. 24 λ | 0. 26 λ | 0. 26 λ | 0. 24 λ | 0. 24 λ |
| $d_4$ | 0. 24 λ | 0. 26 λ | 0. 24 λ | 0. 26 λ | 0. 23 λ | 0. 27 λ | 0. 23 λ | 0. 27 λ | 0. 23 λ | 0. 27 λ |
| Refrectance (%) | 0.19 | 0.06 | 0.38 | 0.03 | 0.34 | 1 | 0.23 | 0.97 | 0.38 | 0.59 |
| $d_1$ | 0. 08 λ | 0. 08 λ | 0. 11 λ | 0. 11 λ | 0. 11 λ | 0. 11 λ | 0. 11 λ | 0. 11 λ | 0. 11 λ | 0. 11 λ |

[Table 10] (continued)

| | | | | | | | | | | |
|---|---|---|---|---|---|---|---|---|---|---|
| $d_2$ | 0.07 $\lambda$ | 0.07 $\lambda$ | 0.06 $\lambda$ | 0.06 $\lambda$ | 0.06 $\lambda$ | 0.06 $\lambda$ | 0.07 $\lambda$ | 0.07 $\lambda$ | 0.07 $\lambda$ | 0.07 $\lambda$ |
| $d_3$ | 0.26 $\lambda$ | 0.26 $\lambda$ | 0.24 $\lambda$ | 0.24 $\lambda$ | 0.26 $\lambda$ | 0.26 $\lambda$ | 0.24 $\lambda$ | 0.24 $\lambda$ | 0.26 $\lambda$ | 0.26 $\lambda$ |
| $d_4$ | 0.23 $\lambda$ | 0.27 $\lambda$ | 0.23 $\lambda$ | 0.27 $\lambda$ | 0.23 $\lambda$ | 0.27 $\lambda$ | 0.23 $\lambda$ | 0.27 $\lambda$ | 0.23 $\lambda$ | 0.27 $\lambda$ |
| Refrectance (%) | 0.32 | 0.6 | 0.12 | 0.37 | 0.22 | 0.25 | 0.47 | 0.09 | 0.63 | 0.03 |

As shown in Table 10, it can be understood that when the thickness $d_1$ of the first layer 101 is in the range of $0.08\lambda$ to $0.11\lambda$, the thickness $d_2$ of the second layer 102 is in the range of $0.06\lambda$ to $0.07\lambda$, the thickness $d_3$ of the third layer 103 is in the range of $0.24\lambda$ to $0.26\lambda$, and the thickness $d_4$ of the fourth layer 104 is in the range of $0.24\lambda$ to $0.26\lambda$, the reflectance level is equal to or lower than 0.7%, thus making it possible to obtain an excellent antireflection effect. Furthermore, a similar effect can be obtained as long as the refractivities of the first layer 101 and third layer 103 are in the range of 1.95 to 2.35 even if they take on values other than 2.20.

This also reflects the following concept. That is, the values of thicknesses $d_1$, $d_2$, $d_3$ and $d_4$, giving a reflectance level of 0.7% or lower have certain ranges, and therefore if $d_1$ is set to $0.095\lambda$, $d_2$ is set to $0.065\lambda$, $d_3$ is set to $0.25\lambda$ and $d_4$ is set to $0.25\lambda$ as optimum values for production, for example, the resulting coating can provide a sufficient antireflection effect even if the thickness $d_1$ suffers production based variations of $\pm0.015\lambda$, the thickness $d_2$ suffers production based variations of $\pm0.005\lambda$, the thickness $d_3$ suffers production based variations of $\pm0.001\lambda$, and the thickness $d_4$ suffers production based variations of $\pm0.001\lambda$.

When the coating is produced based on a conventional technique, the thicknesses $d_1$ to $d_4$ satisfying appropriate conditions as to the reflectance level must be defined as a unique pair of optimum values giving the best reflectance level, and thus an antireflection coating with layer thickness deviating from the defined values may be considered as a defective item even if the deviation from the optimum value is very small, resulting in a drop in yield during production.

In this embodiment, however, conditions for thickness with respect to an optimum value of reflectance are defined as certain ranges of values, whereby the coating can be produced in anticipation of variations in thickness during production, resulting in enhanced yields during production.

Furthermore, in this embodiment, the case where a wavelength of 1510 nm is applied has been described, but an antireflection coating having same optical properties can be obtained with any wavelength if optical thickness is increased or decreased in proportion to the wavelength with absorptivity and refractivity kept unchanged. For $TiO_2$ and $SiO_2$, absorptivity is kept at almost 0 through the visible region to the near infrared region, and the magnitude of dispersion of refractivity by wavelengths is small, thus making it possible to obtain an antireflection coating reflecting light through the visible region to the near infrared region only by changing thickness depending on wavelengths.

In addition, $TiO_2$ is used as a material for odd-number layers 101 and 103 in this embodiment, but the odd-number layers 101 and 103 may be formed using any of $TiO_2$, $Ta_2O_5$, $ZrO_2$ and ZnS or a material constituted by a combination thereof, and in this case, an antireflection coating having a similar function can be obtained.

(Embodiment 6)

Embodiment 6 in the present invention will be described with reference to the drawings.

Figure 12 is a sectional view of an antireflection coating provided on the surface of a lens 120 corresponding to a substantially transparent substrate with refractivity of $h_0$ of the present invention. The coating has a very simple structure, and the productivity is enhanced.

BK7 (with refractivity of 1.50) is used as a material for the lens 120, and is provided thereon with a multi-layer coating constituted by a first layer 121, second layer 122, third layer 123 and a fourth layer 124 shown in Table 11.

[Table 11]

| Constitution | Materials | Refractivity | Thickness(nm) | Optical thickness(nm) |
|---|---|---|---|---|
| Fourth layer 124 | $MgF_2$ | 1.37 | 282 | 386 |
| Third layer 123 | $TiO_2$ | 2.20 | 165 | 363 |

[Table 11]   (continued)

| Constitution | Materials | Refractivity | Thickness(nm) | Optical thickness(nm) |
|---|---|---|---|---|
| Second layer 122 | $MgF_2$ | 1.37 | 56 | 76 |
| First layer 121 | $TiO_2$ | 2.20 | 86 | 189 |
| Lens 120 | BK7 | 1.50 | — | — |

The method for forming the multi-layer coating of Table 11 is not described here because it is almost same as the method described in Embodiment 1.

Figure 13 shows dependency of reflectance on wavelengths when light is vertically let in, with respect to the antireflection coating constituted by the first layer 121, second layer 122, third layer 123 and fourth layer 124 of Table 11.

As shown in Figure 13, the reflectance level is 0.2% or lower when the wavelength is in the range of from 1330 to 1590 nm. This shows that the antireflection coating shown in Figure 12 has an excellent antireflection effect for a very wide range of wavelengths. In this way, because the antireflection effect is retained even if the thickness is more or less deviated from a predefined thickness, a margin of production is increased to provide an advantage in terms of costs. Even in the case of a lens having a large curvature, the antireflection effect can be obtained for the entire lens, thus providing an advantage in terms of performance.

The antireflection coating of Embodiment 6 is highly reliable because $TiO_2$ and $MgF_2$ having excellent chemical durability and mechanical strength are used as coating materials. Properties of samples made on an experimental basis were evaluated before and after they were subjected to heat shock tests at 80°C and -20°C and high temperature/ humidity tests at 85°C and 95% RH, and as a result, it has been found that neither appearances nor optical properties of coatings were changed.

This is due to the fact that for the antireflection coating of the present invention, internal stresses generating in the coating can be neutralized using predetermined tried-and-true materials and predetermined thickness. Furthermore, it is desirable that the substrate is heated during formation of the coating as in this embodiment from a viewpoint of reliability, but it is also possible to coat the substrate at a normal temperature, and coatings can be applied to lenses made of plastic as well as various kinds of glass based lenses.

As described above, the antireflection coating of the Embodiment 6 is excellent in optical property and reliability, and has only a small number of layers with two types of materials resulting in inexpensiveness, and therefore if this coating is applied to optical components such as lenses, prisms, fibers and optical waveguides, very useful optical elements can be obtained.

In addition, the process for forming a coating is not limited to a vacuum coating process, and for example, a spattering process may be used.

As a result of more detailed considerations , in the present invention, it has been found that even for a structure other than the structure described in this embodiment, a similar antireflection effect can be expected if the refractivity $n_0$ of the lens 120 as a substrate is in the range of 1.42 to 1.53, the refractivity $n_1$ of the first layer 121 is in the range of 1.95 to 2.35, the optical thickness $d_1$ of the first layer 121 is in the range of $0.11\lambda$ to $0.13\lambda$, wherein the central wavelength is $\lambda$ (nm) ($\lambda$= 1510 nm for this embodiment), the optical thickness $d_2$ of $MgF_2$ of the second layer 122 is in the range of $0.04\lambda$ to $0.07\lambda$, the refractivity $n_3$ of the third layer 123 is in the range of 1.95 to 2.35, the optical thickness $d_3$ of the third layer 123 is in the range of $0.23\lambda$ to $0.25\lambda$, and the optical thickness $d_4$ of $MgF_2$ of the fourth layer 124 is in the range of $0.25\lambda$ to $0.27\lambda$. For one specific example of the lens, Model No. S-FPL53 (refractivity of 1.43 at a wavelength of 1530 nm) manufactured by Ohara Co. , Ltd. or Model No. S-BAL53 (refractivity of 1.52 at a wavelength of 1530 nm) manufactured by the same company may be used.

In Table 12 is shown as one example the reflectance level of the antireflection coating when the thicknesses of the first layer 121, second layer 122, third layer 123 and fourth layer 124 are changed in the case where the refractivity of the lens 120 is 1.50 (BK7), the first layer 121 and third layer 123 provided on the lens 120 are layers of $TiO_2$ with refractivity of 2.20, and the second layer 122 and fourth layer 124 are layers of $MgF_2$ with refractivity of 1.37.

[Table 12]

| $n_0$=1.50(BK7)    $n_2$=$n_4$=1. 37($MgF_2$) $n_1$=$n_3$=2. 20($TiO_2$)    $\lambda$=1510nm | | | | | | | | | |
|---|---|---|---|---|---|---|---|---|---|
| $d_1$ | $0.11\lambda$ | $0.11\lambda$ | $0.11\lambda$ | $0.11\lambda$ | $0.11\lambda$ | $0.11\lambda$ | $0.11\lambda$ | $0.11\lambda$ | $0.11\lambda$ | $0.13\lambda$ |
| $d_2$ | $0.05\lambda$ | $0.05\lambda$ | $0.05\lambda$ | $0.05\lambda$ | $0.06\lambda$ | $0.06\lambda$ | $0.06\lambda$ | $0.06\lambda$ | $0.05\lambda$ | $0.05\lambda$ |

[Table 12]   (continued)

| | | | | | | | | | | |
|---|---|---|---|---|---|---|---|---|---|---|
| $d_3$ | 0.23λ | 0.23λ | 0.25λ | 0.25λ | 0.23λ | 0.23λ | 0.25λ | 0.25λ | 0.23λ | 0.23λ |
| $d_4$ | 0.25λ | 0.27λ | 0.25λ | 0.27λ | 0.25λ | 0.27λ | 0.25λ | 0.27λ | 0.25λ | 0.27λ |
| Refrectance (%) | 0.32 | 0.8 | 0.2 | 0.6 | 0.12 | 0.31 | 0.15 | 0.25 | 0.02 | 0.31 |
| $d_1$ | 0.13λ | 0.13λ | 0.13λ | 0.13λ | 0.13λ | 0.13λ | 0.10λ | 0.10λ | 0.10λ | 0.10λ |
| $d_2$ | 0.05λ | 0.05λ | 0.06λ | 0.06λ | 0.06λ | 0.06λ | 0.05λ | 0.05λ | 0.05λ | 0.05λ |
| $d_3$ | 0.25λ | 0.25λ | 0.23λ | 0.23λ | 0.25λ | 0.25λ | 0.23λ | 0.23λ | 0.25λ | 0.25λ |
| $d_4$ | 0.25λ | 0.27λ | 0.25λ | 0.27λ | 0.25λ | 0.27λ | 0.25λ | 0.27λ | 0.25λ | 0.27λ |
| Refrectance (%) | 0 | 0.12 | 0.08 | 0.02 | 0.22 | 0.01 | 0.63 | 1.17 | 0.48 | 0.98 |
| $d_1$ | 0.10λ | 0.10λ | 0.10λ | 0.10λ | 0.14λ | 0.14λ | 0.14λ | 0.14λ | 0.14λ | 0.14λ |
| $d_2$ | 0.06λ | 0.06λ | 0.06λ | 0.06λ | 0.05λ | 0.05λ | 0.05λ | 0.05λ | 0.06λ | 0.06λ |
| $d_3$ | 0.23λ | 0.23λ | 0.25λ | 0.25λ | 0.23λ | 0.23λ | 0.25λ | 0.25λ | 0.23λ | 0.23λ |
| $d_4$ | 0.25λ | 0.27λ | 0.25λ | 0.27λ | 0.25λ | 0.27λ | 0.25λ | 0.27λ | 0.25λ | 0.27λ |
| Refrectance (%) | 0.34 | 0.62 | 0.33 | 0.56 | 0.04 | 0.2 | 0.09 | 0.04 | 0.25 | 0.04 |
| $d_1$ | 0.14λ | 0.14λ | 0.11λ | 0.11λ | 0.11λ | 0.11λ | 0.11λ | 0.11λ | 0.11λ | 0.11λ |
| $d_2$ | 0.06λ | 0.06λ | 0.04λ | 0.04λ | 0.04λ | 0.04λ | 0.07λ | 0.07λ | 0.07λ | 0.07λ |
| $d_3$ | 0.25λ | 0.25λ | 0.23λ | 0.23λ | 0.25λ | 0.25λ | 0.23λ | 0.23λ | 0.25λ | 0.25λ |
| $d_4$ | 0.25λ | 0.27λ | 0.25λ | 0.27λ | 0.25λ | 0.27λ | 0.25λ | 0.27λ | 0.25λ | 0.27λ |
| Refrectance (%) | 0.47 | 0.08 | 0.82 | 1.58 | 0.57 | 1.25 | 0.23 | 0.13 | 0.41 | 0.22 |
| $d_1$ | 0.13λ | 0.13λ | 0.13λ | 0.13λ | 0.13λ | 0.13λ | 0.13λ | 0.13λ | 0.11λ | 0.11λ |
| $d_2$ | 0.04λ | 0.04λ | 0.04λ | 0.04λ | 0.07λ | 0.07λ | 0.07λ | 0.07λ | 0.05λ | 0.05λ |
| $d_3$ | 0.23λ | 0.23λ | 0.25λ | 0.25λ | 0.23λ | 0.23λ | 0.25λ | 0.25λ | 0.22λ | 0.22λ |
| $d_4$ | 0.25λ | 0.27λ | 0.25λ | 0.27λ | 0.25λ | 0.27λ | 0.25λ | 0.27λ | 0.25λ | 0.27λ |
| Refrectance (%) | 0.33 | 0.95 | 0.14 | 0.6 | 0.48 | 0.09 | 0.8 | 0.27 | 0.39 | 0.91 |

[Table 12]   (continued)

| | | | | | | | | | | |
|---|---|---|---|---|---|---|---|---|---|---|
| $d_1$ | 0. 11 $\lambda$ | 0. 11 $\lambda$ | 0. 11 $\lambda$ | 0. 11 $\lambda$ | 0. 11 $\lambda$ | 0. 11 $\lambda$ | 0. 13 $\lambda$ | 0. 13 $\lambda$ | 0. 13 $\lambda$ | 0. 13 $\lambda$ |
| $d_2$ | 0. 05 $\lambda$ | 0. 05 $\lambda$ | 0. 06 $\lambda$ | 0. 06 $\lambda$ | 0. 06 $\lambda$ | 0. 06 $\lambda$ | 0. 05 $\lambda$ | 0. 05 $\lambda$ | 0. 05 $\lambda$ | 0. 05 $\lambda$ |
| $d_3$ | 0. 26 $\lambda$ | 0. 26 $\lambda$ | 0. 22 $\lambda$ | 0. 22 $\lambda$ | 0. 26 $\lambda$ | 0. 26 $\lambda$ | 0. 22 $\lambda$ | 0. 22 $\lambda$ | 0. 26 $\lambda$ | 0. 26 $\lambda$ |
| $d_4$ | 0. 25 $\lambda$ | 0. 27 $\lambda$ | 0. 25 $\lambda$ | 0. 27 $\lambda$ | 0. 25 $\lambda$ | 0. 27 $\lambda$ | 0. 25 $\lambda$ | 0. 27 $\lambda$ | 0. 25 $\lambda$ | 0. 27 $\lambda$ |
| Refrectance (%) | 0.16 | 0.51 | 0.13 | 0.36 | 0.18 | 0.24 | 0.07 | 0.43 | 0.02 | 0.06 |
| $d_1$ | 0. 13 $\lambda$ | 0. 13 $\lambda$ | 0. 13 $\lambda$ | 0. 13 $\lambda$ | 0. 11 $\lambda$ | 0. 11 $\lambda$ | 0. 11 $\lambda$ | 0. 11 $\lambda$ | 0. 11 $\lambda$ | 0. 11 $\lambda$ |
| $d_2$ | 0. 06 $\lambda$ | 0. 06 $\lambda$ | 0. 06 $\lambda$ | 0. 06 $\lambda$ | 0. 05 $\lambda$ | 0. 05 $\lambda$ | 0. 05 $\lambda$ | 0. 05 $\lambda$ | 0. 06 $\lambda$ | 0. 06 $\lambda$ |
| $d_3$ | 0. 22 $\lambda$ | 0. 22 $\lambda$ | 0.26 $\lambda$ | 0. 26 $\lambda$ | 0. 23 $\lambda$ | 0. 23 $\lambda$ | 0. 25 $\lambda$ | 0. 25 $\lambda$ | 0. 23 $\lambda$ | 0. 23 $\lambda$ |
| $d_4$ | 0. 25 $\lambda$ | 0. 27 $\lambda$ | 0. 25 $\lambda$ | 0. 27 $\lambda$ | 0. 24 $\lambda$ | 0. 28 $\lambda$ | 0. 24 $\lambda$ | 0. 28 $\lambda$ | 0. 24 $\lambda$ | 0. 28 $\lambda$ |
| Refrectance (%) | 0.03 | 0.06 | 0.33 | 0.05 | 0.24 | 1.18 | 0.15 | 0.94 | 0.18 | 0.55 |
| $d_1$ | 0. 11 $\lambda$ | 0. 11 $\lambda$ | 0. 13 $\lambda$ | 0. 13 $\lambda$ | 0. 13 $\lambda$ | 0. 13 $\lambda$ | 0. 13 $\lambda$ | 0. 13 $\lambda$ | 0. 13 $\lambda$ | 0. 13 $\lambda$ |
| $d_2$ | 0. 06 $\lambda$ | 0. 06 $\lambda$ | 0. 05 $\lambda$ | 0. 05 $\lambda$ | 0. 05 $\lambda$ | 0. 05 $\lambda$ | 0. 06 $\lambda$ | 0. 06 $\lambda$ | 0. 06 $\lambda$ | 0. 06 $\lambda$ |
| $d_3$ | 0. 25 $\lambda$ | 0. 25 $\lambda$ | 0. 23 $\lambda$ | 0. 23 $\lambda$ | 0. 25 $\lambda$ | 0. 25 $\lambda$ | 0. 23 $\lambda$ | 0. 23 $\lambda$ | 0. 25 $\lambda$ | 0. 25 $\lambda$ |
| $d_4$ | 0. 24 $\lambda$ | 0. 28 $\lambda$ | 0. 24 $\lambda$ | 0. 28 $\lambda$ | 0. 24 $\lambda$ | 0. 28 $\lambda$ | 0. 24 $\lambda$ | 0. 28 $\lambda$ | 0. 24 $\lambda$ | 0. 28 $\lambda$ |
| Refrectance (%) | 0.25 | 0.45 | 0 | 0.56 | 0.06 | 0.3 | 0.22 | 0.11 | 0.45 | 0.03 |

As shown in Table 12, it can be understood that when the thickness $d_1$ of the first layer 121 is in the range of $0.11\lambda$ to $0.13\lambda$, the thickness $d_2$ of the second layer 122 is in the range of $0.05\lambda$ to $0.06\lambda$, the thickness $d_3$ of the third layer 123 is in the range of $0.23\lambda$ to $0.25\lambda$, and the thickness $d_4$ of the fourth layer 124 is in the range of $0.25\lambda$ to $0.27\lambda$, the reflectance level is equal to or lower than 0.9%, thus making it possible to obtain an excellent antireflection effect. Furthermore, a similar effect can be obtained as long as the refractivities of the first layer 121 and third layer 123 are in the range of 1.95 to 2.35 even if they take on values other than 2.20.

This also reflects the following concept. That is, the values of thicknesses $d_1$, $d_2$, $d_3$ and $d_4$ giving a reflectance level of 0.9% or lower have certain ranges, and therefore if $d_1$ is set to $0.12\lambda$, $d_2$ is set to $0.055\lambda$, $d_3$ is set to $0.24\lambda$ and $d_4$ is set to $0.26\lambda$ as optimum values for production, for example, the resulting coating can provide a sufficient antireflection effect even if the thickness $d_1$ suffers production based variations of $\pm0.01\lambda$, the thickness $d_2$ suffers production based variations of $\pm0.005\lambda$, the thickness $d_3$ suffers production based variations of $\pm0.01\lambda$, and the thickness $d_4$ suffers production based variations of $\pm0.01\lambda$.

When the coating is produced based on a conventional technique, the thicknesses $d_1$ to $d_4$ satisfying appropriate conditions as to the reflectance level must be defined as a unique pair of optimum values giving the best reflectance level, and thus an antireflection coating with layer thickness deviating from the defined values may be considered as a defective item even if the deviation from the optimum value is very small, resulting in a drop in yield during production.

In this embodiment, however, conditions for thickness with respect to an optimum value of reflectance are defined as certain ranges of values, whereby the coating can be produced in anticipation of variations in thickness during production, resulting in enhanced yields during production.

Furthermore, in this embodiment, the case where a wavelength of 1510 nm is applied has been described, but an antireflection coating having same optical properties can be obtained with any wavelength if optical thickness is increased or decreased in proportion to the wavelength with absorptivity and refractivity kept unchanged. For $TiO_2$ and $MgF_2$, absorptivity is kept at almost 0 through the visible region to the near infrared region, and the magnitude of dispersion of refractivity by wavelengths is small, thus making it possible to obtain an antireflection coating reflecting light through the visible region to the near infrared region only by changing thickness depending on wavelengths.

In addition, $TiO_2$ is used as a material for odd-number layers 121 and 123 in this embodiment, but the odd-number layers 121 and 123 may be formed using any of $TiO_2$, $Ta_2O_5$, $ZrO_2$ and $ZnS$ or a material constituted by a combination thereof, and in this case, an antireflection coating having a similar function can be obtained.

As described above, for the antireflection coatings of the embodiments of the present invention, coating materials capable of being used on a practical basis are used to provide two to four layers, the refractivity level of 1% or lower is achieved at predetermined wavelengths, and conditions of thickness are defined in anticipation of production based variations, thus facilitating production and enhancing yields.

In addition, an optical element comprising such an antireflection coating is highly efficient, highly reliable and inexpensive, and thus is very useful.

Furthermore, in addition to the antireflection coating of the present invention, the optical element comprising a substantially transparent substrate with refractivity of $n_0$ corresponding to the antireflection coating also belongs to the present invention. Here, substrates include a lens, a prism, fibers and an optical waveguide.

As apparent from the above description, the present invention can provide an antireflection coating with a reflectance level of 1% or lower or 0.5% or lower, and an optical element comprising the antireflection coating while enhancing yields in anticipation of production based variations.

**Claims**

1. An antireflection coating comprising at least a first layer constituted by a coating with refractivity of $n_1$ and optical thickness of $d_1$ which is provided on a substantially transparent substrate with refractivity of $n_0$, and a second layer constituted by a $SiO_2$ coating with optical thickness of $d_2$ which is provided on the first layer,
   wherein said $n_0$, $n_1$, $d_1$ and $d_2$ satisfy the following conditions:
   $1.42 \leq n_0 \leq 1.53$,
   $1.95 \leq n_1 \leq 2.35$, $0.40\lambda \leq d_1 \leq 0.44\lambda$, and
   $0.40\lambda \leq d_2 \leq 0.44\lambda$,
   wherein the central wavelength of light to be prevented from being reflected is $\lambda$.

2. An antireflection coating comprising at least a first layer constituted by a coating with refractivity of $n_1$ and optical thickness of $d_1$ which is provided on a substantially transparent substrate with refractivity of $n_0$, and a second layer constituted by a $MgF_2$ coating with optical thickness of $d_2$ which is provided on the first layer,
   wherein said $n_0$, $n_1$, $d_1$ and $d_2$ satisfy the following conditions:
   $1.42 \leq n_0 \leq 1.53$,
   $1.95 \leq n_1 \leq 2.35$, $0.42\lambda \leq d_1 \leq 0.46\lambda$, and
   $0.17\lambda \leq d_2 \leq 0.19\lambda$,
   wherein the central wavelength of light to be prevented from being reflected is $\lambda$.

3. An antireflection coating comprising at least a first layer constituted by a $SiO_2$ coating with optical thickness of $d_1$ which is provided on a substantially transparent substrate with refractivity of $n_0$, a second layer constituted by a coating with refractivity of $n_2$ and optical thickness of $d_2$ which is provided on the first layer, and a third layer constituted by a $SiO_2$ coating with optical thickness of $d_3$ which is provided on the second layer,
   wherein said $n_0$, $d_1$, $n_2$, $d_2$ and $d_3$ satisfy the following conditions:
   $1.42 \leq n_0 \leq 1.53$,
   $0.06\lambda \leq d_1 \leq 0.07\lambda$,
   $1.95 \leq n_2 \leq 2.35$, $0.41\lambda \leq d_2 \leq 0.45\lambda$, and
   $0.16\lambda \leq d_3 \leq 0.18\lambda$,
   wherein the central wavelength of light to be prevented from being reflected is $\lambda$.

4. An antireflection coating comprising at least a first layer constituted by a $MgF_2$ coating with optical thickness of $d_1$ which is provided on a substantially transparent substrate with refractivity of $n_0$, a second layer constitutedby a coating with refractivity of $n_2$ and optical thickness of $d_2$ which is provided on the first layer, and a third layer constituted by a $MgF_2$ coating with optical thickness of $d_3$ which is provided on the second layer,

wherein said $n_0$, $d_1$, $n_2$, $d_2$ and $d_3$ satisfy the following conditions:

$1.42 \leq n_0 \leq 1.53$,

$0.05\lambda \leq d_1 \leq 0.07\lambda$,

$1.95 \leq n_2 \leq 2.35$, $0.43\lambda \leq d_2 \leq 0.46\lambda$, and

$0.16\lambda \leq d_3 \leq 0.19\lambda$,

wherein the central wavelength of light to be prevented from being reflected is $\lambda$.

5. An antireflection coating comprising at least a first layer constituted by a coating with refractivity of $n_1$ and optical thickness of $d_1$ which is provided on a substantially transparent substrate with refractivity of $n_0$, a second layer constituted by a $SiO_2$ coating with optical thickness of $d_2$ which is provided on the first layer, third layer constituted by a coating with refractivity of $n_3$ and optical thickness of $d_3$ which is provided on the second layer, and a fourth layer constituted by a $SiO_2$ coating with optical thickness of $d_4$ which is provided on the third layer,

wherein said $n_0$, $n_1$, $d_1$, $d_2$, $n_3$, $d_3$ and $d_4$ satisfy the following conditions:

$1.42 \leq n_0 \leq 1.53$,

$1.95 \leq n_1 \leq 2.35$, $0.08\lambda \leq d_1 \leq 0.11\lambda$,

$0.06\lambda \leq d_2 \leq 0.07\lambda$,

$1.95 \leq n_3 \leq 2.35$, $0.24\lambda \leq d_3 \leq 0.26\lambda$, and

$0.24\lambda \leq d_4 \leq 0.26\lambda$,

wherein the central wavelength of light to be prevented from being reflected is $\lambda$.

6. An antireflection coating comprising at least a first layer constituted by a coating with refractivity of $n_1$ and optical thickness of $d_1$ which is provided on a substantially transparent substrate with refractivity of $n_0$, a second layer constituted by a $MgF_2$ coating with optical thickness of $d_2$ which is provided on the first layer, third layer constituted by a coating with refractivity of $n_3$ and optical thickness of $d_3$ which is provided on the second layer, and a fourth layer constituted by a $MgF_2$ coating with optical thickness of $d_4$ which is provided on the third layer,

wherein said $n_0$, $n_1$, $d_1$, $d_2$, $n_3$, $d_3$ and $d_4$ satisfy the following conditions:

$1.42 \leq n_0 \leq 1.53$,

$1.95 \leq n_1 \leq 2.35$, $0.11\lambda \leq d_1 \leq 0.13\lambda$,

$0.05\lambda \leq d_2 \leq 0.06\lambda$,

$1.95 \leq n_3 \leq 2.35$, $0.23\lambda \leq d_3 \leq 0.25\lambda$, and

$0.25\lambda \leq d_4 \leq 0.27\lambda$,

wherein the central wavelength of light to be prevented from being reflected is $\lambda$.

7. The antireflection coating according to any of claims 1, 3 and 5, wherein the layers other than those constituted by $SiO_2$ coatings are constituted by any of $TiO_2$, $Ta_2O_5$, $ZrO_2$ and ZnS or combinations thereof.

8. The antireflection coating according to any of claims 2, 4 and 6, wherein the layers other than those constituted by $MgF_2$ coatings are constituted by any of $TiO_2$, $Ta_2O_5$, $ZrO_2$ and ZnS or combinations thereof.

9. An optical element comprising the antireflection coating according to any of claims 1 to 8 and said substantially transparent substrate with refractivity of $n_0$ corresponding to the antireflection coating.

# Fig. 1

12

11

10

# Fig. 2

HEATER

LENS

VACUUM CHAMBER

QUARTZ SENSOR

VACUUM PUMP

$SiO_2$

$TiO_2$

ELECTRON GUN

# Fig. 3

# Fig. 4

# Fig. 5

# Fig. 6

Fig. 7

Fig. 8

Fig. 9

Fig. 10

# Fig. 11

# Fig. 12

Fig. 13

Fig. 14